# EUROPEAN PATENT APPLICATION

(11) **EP 4 516 380 A1**
(43) Date of publication of application: **05.03.2025**
(21) Application number: 23796532.2
(22) Date of filing: 28.04.2023
(51) Int. Cl.: B01D 53/04, B01D 53/047, B01D 53/62, B01D 53/82, C01B 32/50

(54) **GAS RECOVERY DEVICE AND RECOVERY METHOD**

(30) Priority: 28.04.2022 JP 2022074344
(71) Applicant: Atomis Inc., Kobe-shi, Hyogo 650-0047 (JP)
(72) Inventor: OKAZAKI Kyosuke, Kobe-shi Hyogo 650-0047 (JP)
(74) Representative: AOMB Polska Sp. z.o.o.
(86) International application number: PCT/JP2023/016808
(87) International publication number: WO 2023/210797

(57) **Abstract**

An object of the present disclosure is to provide a gas recovery device and a gas recovery method that improve the amount of gas recovered per hour. The device according to the present disclosure is a device for recovering a specific gas component from a mixed gas. The device includes a first chamber containing a solid adsorbent for adsorbing the specific gas component in the mixed gas, a second chamber for storing or utilizing the specific gas component desorbed from the solid adsorbent, and a pump disposed between the first chamber and the second chamber and used to transport the specific gas component from the first chamber to the second chamber, wherein the pump is also used to feed the mixed gas into the first chamber.

## Description

### TECHNICAL FIELD

The present disclosure relates to a gas recovery device and a gas recovery method. In particular, the present disclosure relates to a device and method for recovering specific gas component(s) from a gas mixture. For example, the present disclosure relates to Direct Air Capture (DAC) technology, which captures carbon dioxide from the air.

### BACKGROUND ART

One example of a technique for separating and recovering a specific gas component from a mixed gas is a method using a solid adsorbent.

For example, Non-Patent Document 1 discloses a carbon dioxide recovery device including a solid adsorbent that preferentially adsorbs carbon dioxide, a chamber containing the solid adsorbent, a fan for feeding air into the chamber, a vacuum pump used for exhausting remaining atmospheric gas from the chamber and transporting carbon dioxide desorbed from the solid adsorbent, an intermediate tank for storing the desorbed carbon dioxide at 1 atmospheric pressure, and a compressor for pressurizing the carbon dioxide stored in the intermediate tank.

In this device, first, air is sent into a chamber using a fan, and carbon dioxide is adsorbed onto a solid adsorbent in the chamber. Next, the atmospheric gas remaining in the chamber is evacuated using a vacuum pump. The chamber is then heated to 90° C and reduced in pressure to 3 kPa using a vacuum pump to transfer the desorbed carbon dioxide to an intermediate tank, thereby obtaining 1 bar of carbon dioxide. The carbon dioxide stored in the intermediate tank is then compressed by a compressor, and 151 bar of carbon dioxide is recovered.

### Citation List

### Non-Patent Literature

[Non-Patent Document 1] "Cost Evaluation of Direct Air Capture (DAC) Process (Vol. 2): Adsorption Method" by Center for Low Carbon Society Strategy, Japan Science and Technology Agency

### SUMMARY OF THE INVENTION

### Technical Problem

However, the present inventors have discovered that when using solid adsorbents in conventional devices such as those described above, unexpected problems can arise. That is, when the gas recovery operation is repeated, the solid adsorbent repeatedly expands and contracts as the gas is adsorbed and desorbed. This can cause cracks to form between the particles of the solid adsorbent, resulting in fissures in the solid adsorbent and the generation of fine powder from the solid adsorbent. The fine powder that is generated can adhere to the pump and cause abnormalities. This increases the time and/or frequency required for pump maintenance, which can result in a decrease in the amount of gas recovered per hour.

Therefore, an object of the present invention is to improve the amount of gas recovered per hour in a gas recovery device and recovery method.

### Solution to Problem

Some aspects of the present invention are as described below.
[1] A device for recovering a specific gas component from a mixed gas, comprising:a first chamber containing a solid adsorbent for adsorbing the specific gas component in the mixed gas;a second chamber for storing or utilizing the specific gas component desorbed from the solid adsorbent; anda pump disposed between the first chamber and the second chamber and used to transport the specific gas component from the first chamber to the second chamber;wherein said pump is also used to feed the mixed gas into the first chamber.
[2] The device according to [1], further comprising a gas inlet for supplying the mixed gas to the device, the gas inlet being disposed between the first chamber and the second chamber.
[3] The device according to [1] or [2], further comprising a gas outlet for removing gases other than the specific gas component remaining in the first chamber, the gas outlet being disposed between the first chamber and the second chamber.
[4] The device according to [2], wherein the gas inlet is also used as a gas outlet for removing gases other than the specific gas component remaining in the first chamber.
[5] The device according to [1], further comprising a gas inlet for supplying the mixed gas to the device, the gas inlet being disposed in the first chamber.
[6] The device according to [5], further comprising a gas outlet for removing gases other than the specific gas component remaining in the first chamber, the gas outlet being disposed between the first chamber and the second chamber.
[7] The device according to any one of [1] to [6], wherein said pump is also used to remove gases other than the specific gas component remaining in the first chamber.
[8] The device according to any one of [1] to [7], wherein said pump is also used to remove gas from the second chamber.
[9] The device according to any one of [1] to [8], further comprising a filter between the first chamber and the pump.
[10] The device according to claim any of [1] to [9], further comprising: at least one valve for varying the flow of gas through the device; and a controller for controlling the operation of the valve.
[11] The device according to any one of [1] to [10], wherein the specific gas component is a greenhouse gas or a harmful gas.
[12] The device according to any one of [1] to [11], wherein the mixed gas is air and the specific gas component is carbon dioxide.
[13] The device according to any one of [1] to [12], wherein the solid adsorbent comprises a metal-organic framework.
[14] A method for recovering a specific gas component from a mixed gas, comprising the steps of:feeding the mixed gas into a solid adsorbent using a pump, thereby adsorbing the specific gas component in the mixed gas onto the solid adsorbent; anddesorbing the specific gas component from the solid adsorbent using said pump.
[15] The method according to [14], the solid adsorbent being held in a first chamber, and further comprising the step ofremoving gases other than the specific gas component remaining in the first chamber between the step of adsorbing the specific gas component and the step of desorbing the specific gas component.
[16] The method according to [15], wherein the step of removing the remaining gas from the first chamber is also performed using said pump.
[17] The method according to any one of [14] to [16], further comprising the step of transporting the specific gas component desorbed from the solid adsorbent to a second chamber using said pump.
[18] The method according to [17], further comprising the step of removing gas from the second chamber using said pump.
[19] The method according to [18], wherein the step of removing gas from the second chamber is performed prior to the step of adsorbing the specific gas component.
[20] The method according to any one of [14] to [19], wherein the specific gas component is a greenhouse gas or a harmful gas.
[21]. The method according to any one of [14] to [20], wherein the mixed gas is air and the specific gas component is carbon dioxide.
[22] The method according to any one of [14] to [21], wherein the solid adsorbent comprises a metal-organic framework.

### Advantageous Effects of Invention

The present invention makes it possible to improve the amount of gas recovered per hour in a gas recovery device and a gas recovery method.

### BRIEF DESCRIPTION OF DRAWINGS

FIG. 1A is a schematic diagram illustrating an example of a device according to one embodiment of the present invention.
FIG. 1B is a flow diagram showing an example of an adsorption process using the device shown in FIG. 1A.
FIG. 1C is a flow diagram showing an example of a desorption process using the device shown in FIG. 1A.
FIG. 2A is a schematic diagram illustrating an example of a device according to another embodiment of the present invention.
FIG. 2B is a flow diagram showing an example of an adsorption process using the device shown in FIG. 2A.
FIG. 2C is a flow diagram showing an example of a desorption process using the device shown in FIG. 2A.
FIG. 3A is a schematic diagram illustrating an example of a device according to another embodiment of the present invention.
FIG. 3B is a flow diagram showing an example of an adsorption process using the device shown in FIG. 3A.
FIG. 3C is a flow diagram showing an example of a desorption process using the device shown in FIG. 3A.
FIG. 4A is a schematic diagram illustrating an example of a device according to another embodiment of the present invention.
FIG. 4B-1 is a flow diagram showing an example of an adsorption process using the device shown in FIG. 4A.

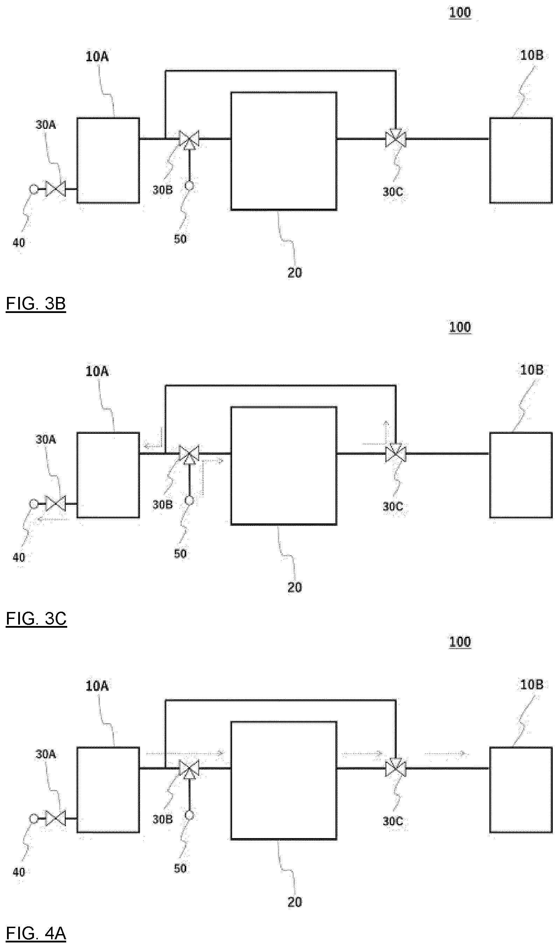

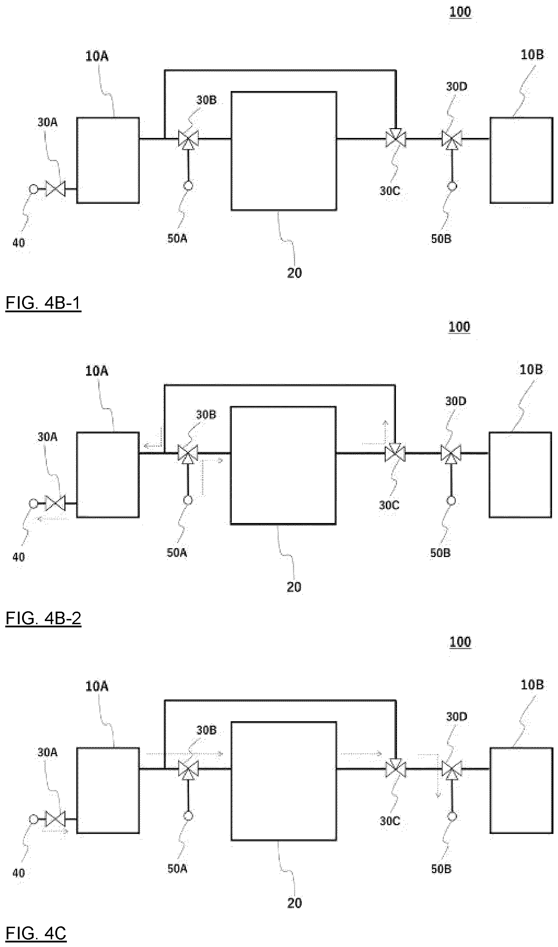

FIG. 4B-2 is a flow diagram showing another example of an adsorption process using the device shown in FIG. 4A.
FIG. 4C is a flow diagram showing an example of a process for removing gases other than a specific gas component remaining in the first chamber in the device shown in FIG. 4A.

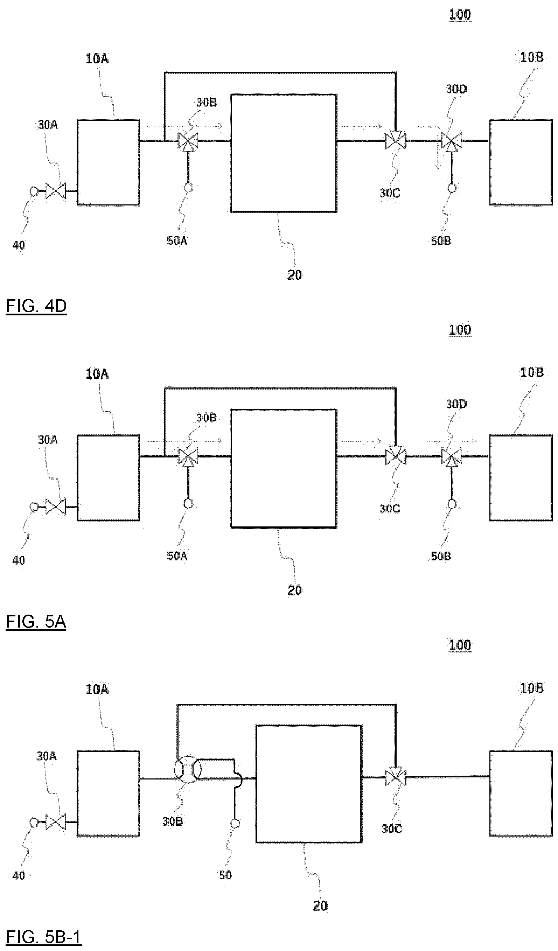

FIG. 4D is a flow diagram showing an example of a desorption process using the device shown in FIG. 4A.
FIG. 5A is a schematic diagram illustrating an example of a device according to another embodiment of the present invention.

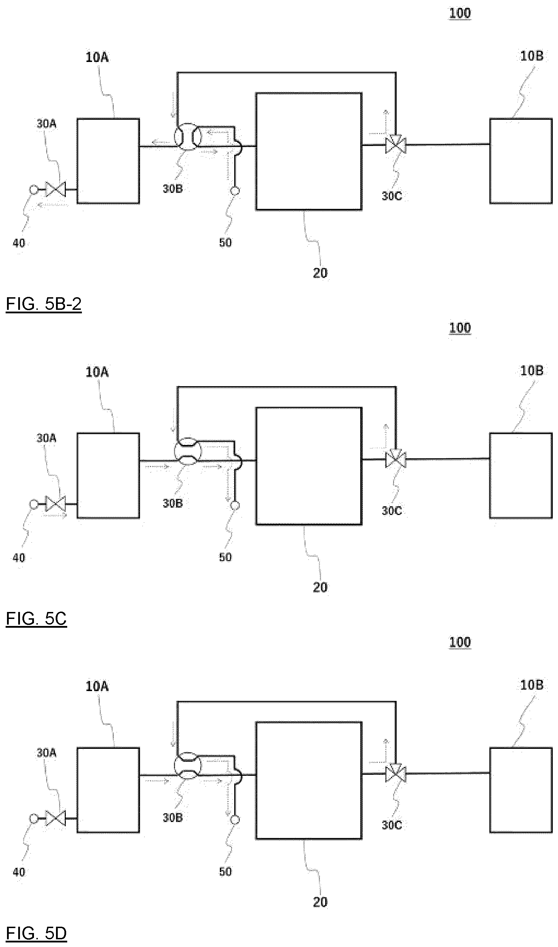

FIG. 5B-1 is a flow diagram showing an example of an adsorption process using the device shown in FIG. 5A.
FIG. 5B-2 is a flow diagram showing another example of the adsorption process using the device shown in FIG. 5A.
FIG. 5C is a flow diagram showing an example of a process for removing gases other than a specific gas component remaining in the first chamber in the device shown in FIG. 5A.
FIG. 5D is a flow diagram showing an example of a desorption process using the device shown in FIG. 5A.

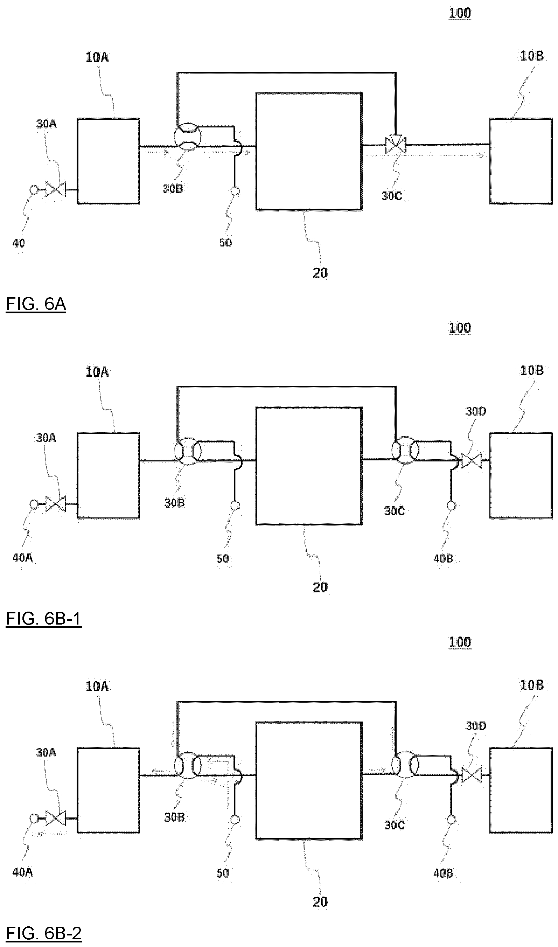

FIG. 6A is a schematic diagram illustrating an example of a device according to another embodiment of the present invention.
FIG. 6B-1 is a flow diagram showing an example of an adsorption process using the device shown in FIG. 6A.
FIG. 6B-2 is a flow diagram showing another example of the adsorption process using the device shown in FIG. 6A.

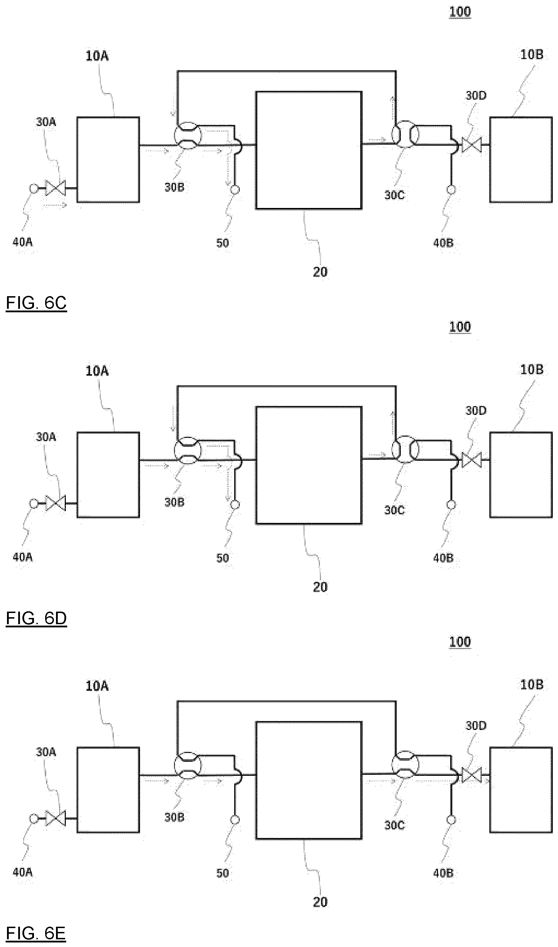

FIG. 6C is a flow diagram showing an example of a process for removing gases other than a specific gas component remaining in the first chamber in the device shown in FIG. 6A.
FIG. 6D is a flow diagram showing an example of a desorption process using the device shown in FIG. 6A.
FIG. 6E is a flow diagram showing an example of a process for recovering or removing gas in the second chamber in the device shown in FIG. 6A.

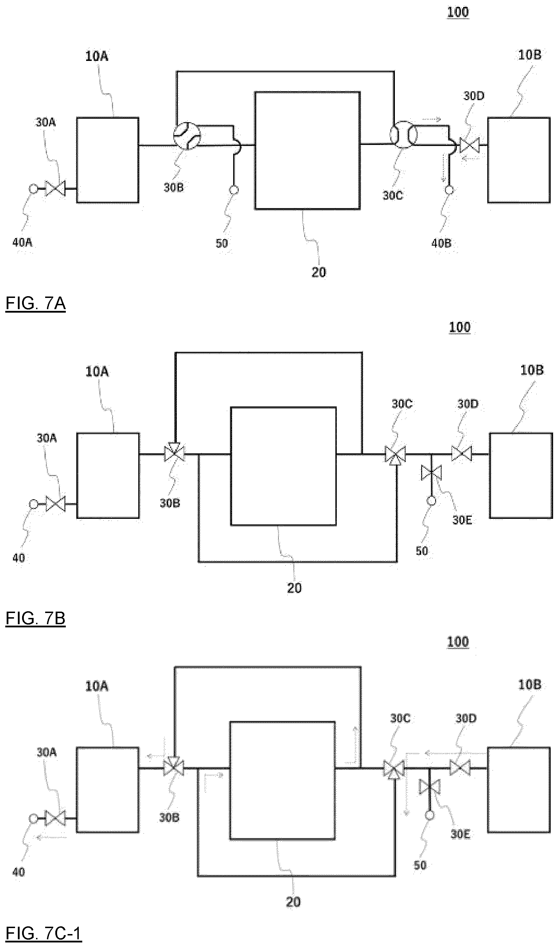

FIG. 7A is a schematic diagram illustrating an example of a device according to another embodiment of the present invention.
FIG. 7B is a flow diagram showing an example of a process for removing gas from the second chamber in the device shown in FIG. 7A.

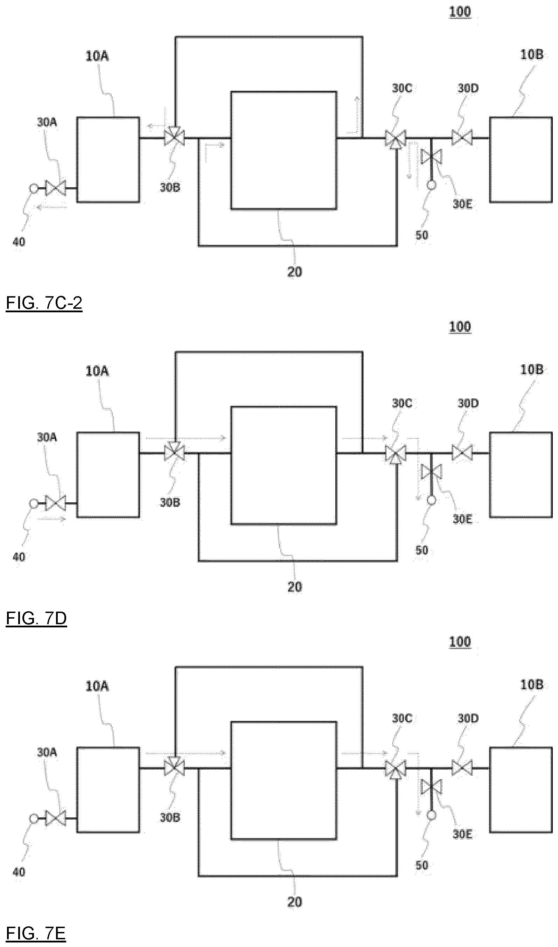

FIG. 7C-1 is a flow diagram showing an example of an adsorption process using the device shown in FIG. 7A.
FIG. 7C-2 is a flow diagram showing another example of the adsorption process using the device shown in FIG. 7A.
FIG. 7D is a flow diagram showing an example of a process for removing gases other than a specific gas component remaining in the first chamber in the device shown in FIG. 7A.
FIG. 7E is a flow diagram showing an example of a desorption process using the device shown in FIG. 7A.

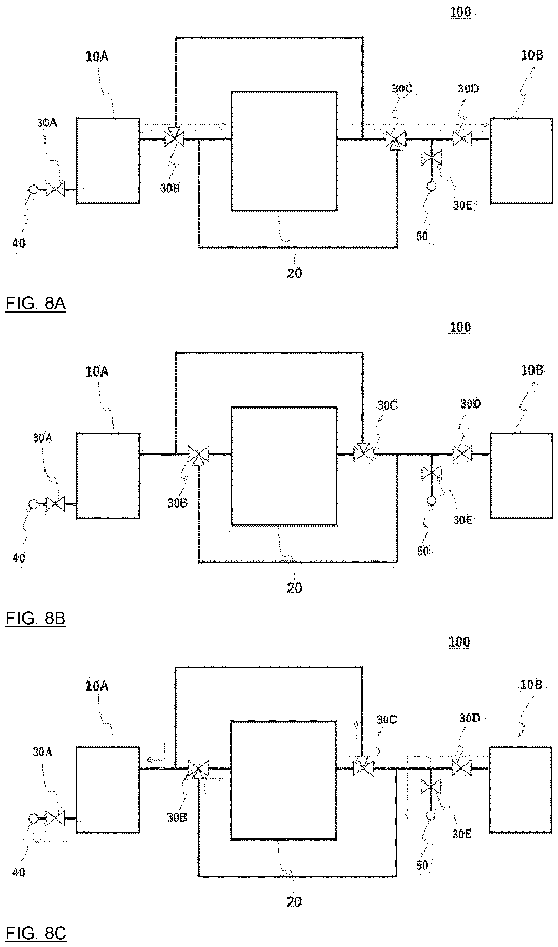

FIG. 8A is a schematic diagram illustrating an example of a device according to another embodiment of the present invention.
FIG. 8B is a flow diagram showing an example of a process for removing gas from the second chamber in the device shown in FIG. 8A.
FIG. 8C is a flow diagram showing an example of an adsorption process using the device shown in FIG. 8A.

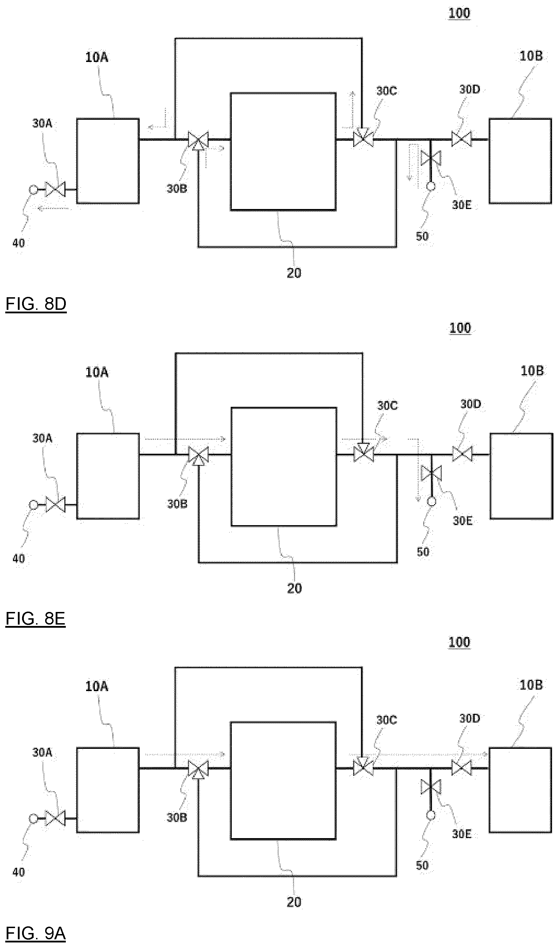

FIG. 8D is a flow diagram showing an example of a process for removing gases other than a specific gas component remaining in the first chamber in the device shown in FIG. 8A.
FIG. 8E is a flow diagram showing an example of a desorption process using the device shown in FIG. 8A.
FIG. 9A is a schematic diagram illustrating an example of a device according to another embodiment of the present invention.

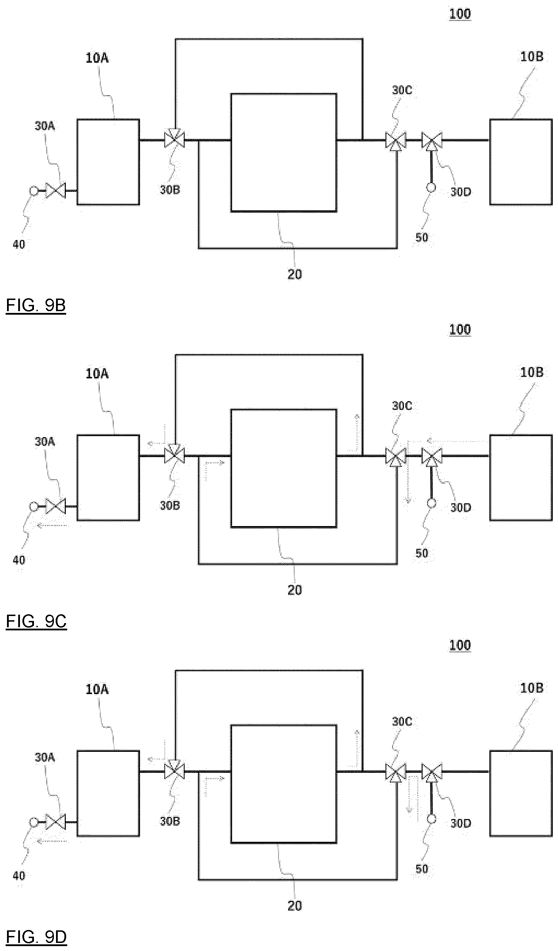

FIG. 9B is a flow diagram showing an example of a process for removing gas from the second chamber in the device shown in FIG. 9A.
FIG. 9C is a flow diagram showing an example of an adsorption process using the device shown in FIG. 9A.
FIG. 9D is a flow diagram showing an example of a process for removing gases other than a specific gas component remaining in the first chamber in the device shown in FIG. 9A.

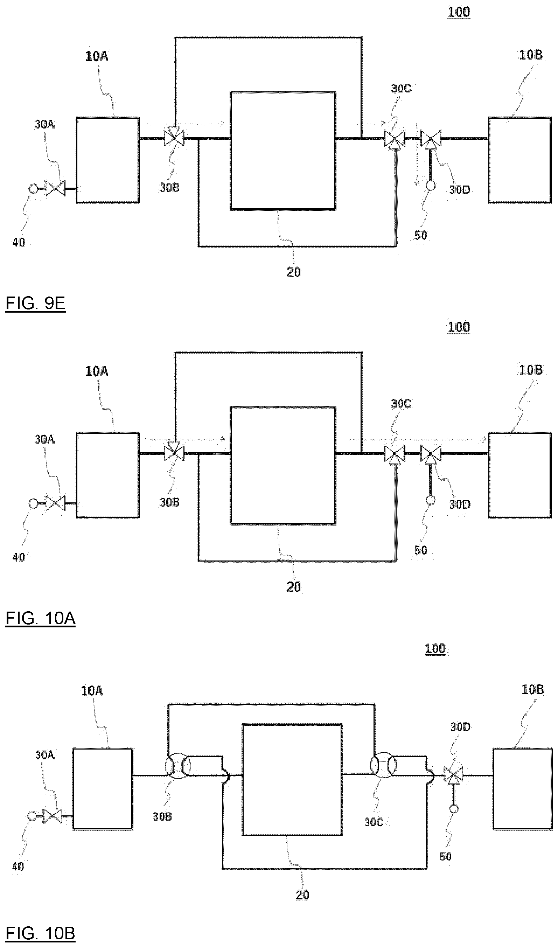

FIG. 9E is a flow diagram showing an example of a desorption process using the device shown in FIG. 9A.
FIG. 10A is a schematic diagram illustrating an example of a device according to another embodiment of the present invention.
FIG. 10B is a flow diagram showing an example of a process for removing gas from the second chamber in the device shown in FIG. 10A.

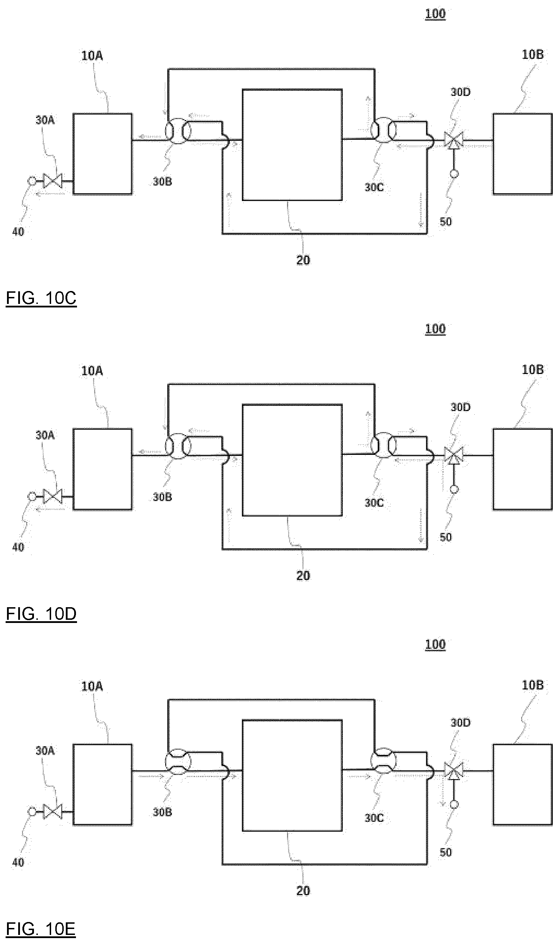

FIG. 10C is a flow diagram showing an example of an adsorption process using the device shown in FIG. 10A.
FIG. 10D is a flow diagram showing an example of a process for removing gases other than a specific gas component remaining in the first chamber in the device shown in FIG. 10A.
FIG. 10E is a flow diagram showing an example of a desorption process using the device shown in FIG. 10A.

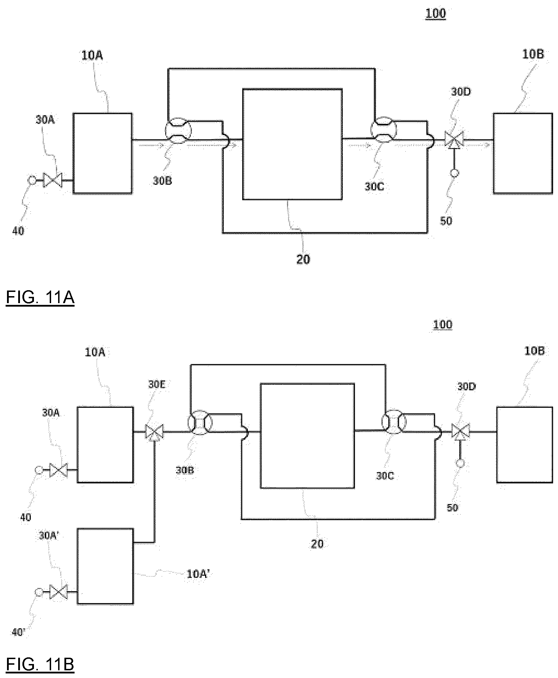

FIG. 11A is a schematic diagram illustrating an example of a device according to another embodiment of the present invention.
FIG. 11B is a flow diagram showing an example of a process for removing gas from the second chamber in the device shown in FIG. 11A.

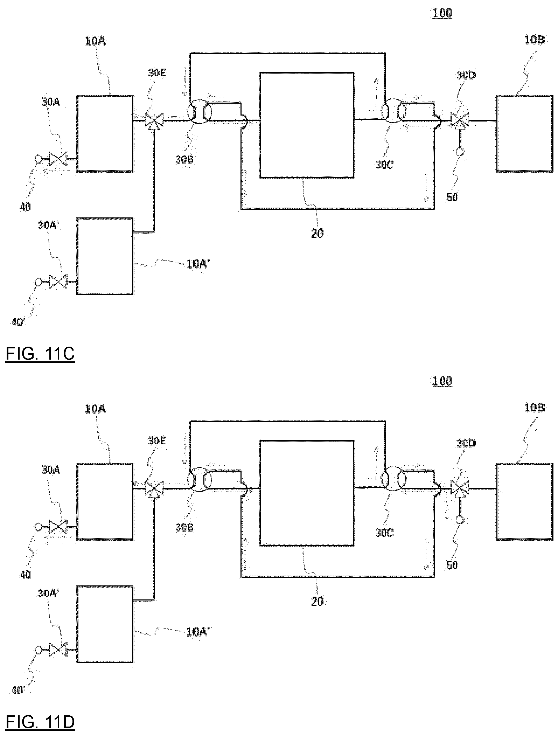

FIG. 11C is a flow diagram showing an example of an adsorption step using the primary first chamber in the device shown in FIG. 11A.
FIG. 11D is a flow diagram showing an example of a process for removing gases other than a specific gas component remaining in the primary first chamber in the device shown in FIG. 11A.

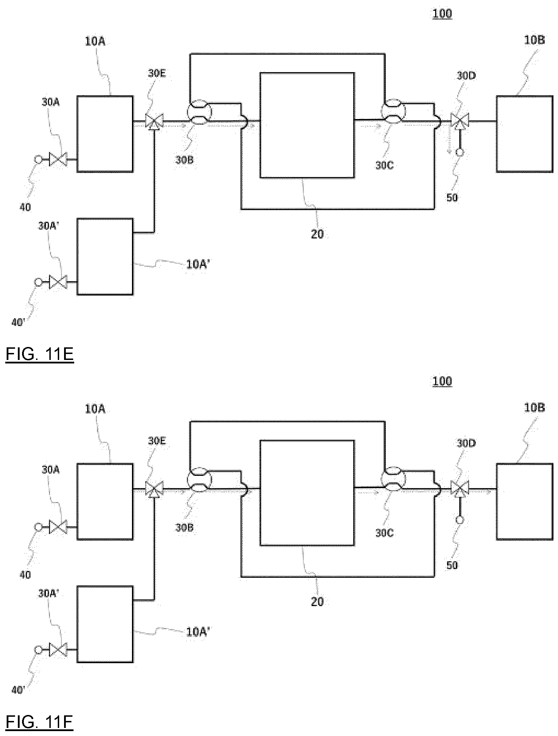

FIG. 11E is a flow diagram showing an example of a desorption step using the primary first chamber in the device shown in FIG. 11A.
FIG. 11F is a flow diagram showing an example of an adsorption step using the secondary first chamber in the device shown in FIG. 11A.

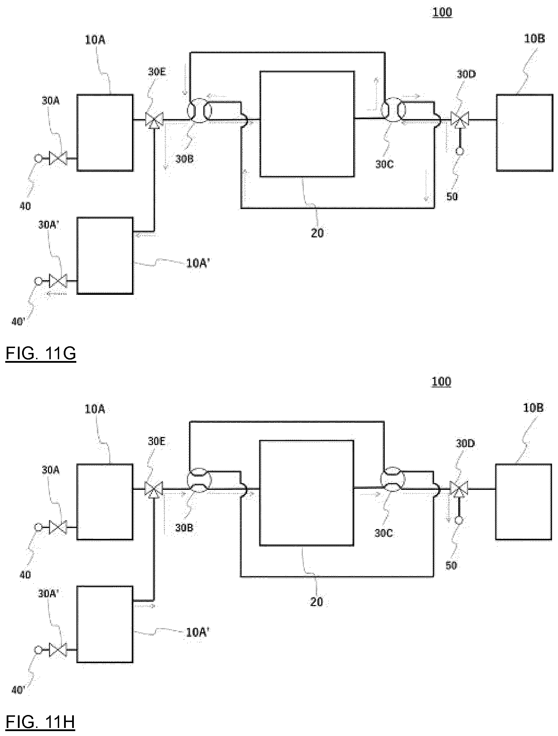

FIG. 11G is a flow diagram showing an example of a process for removing gases other than a specific gas component remaining in the secondary first chamber in the device shown in FIG. 11A.
FIG. 11H is a flow diagram showing an example of a desorption step using the secondary first chamber in the device shown in FIG. 11A.

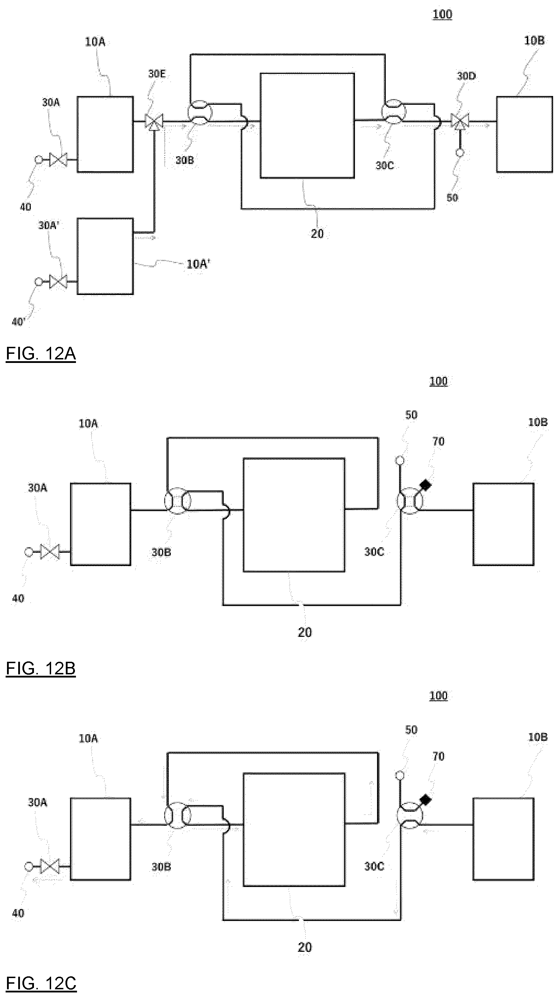

FIG. 12A is a schematic diagram illustrating an example of a device according to another embodiment of the present invention.
FIG. 12B is a flow diagram showing an example of a process for removing gas from the second chamber in the device shown in FIG. 12A.
FIG. 12C is a flow diagram showing an example of an adsorption process using the device shown in FIG. 12A.

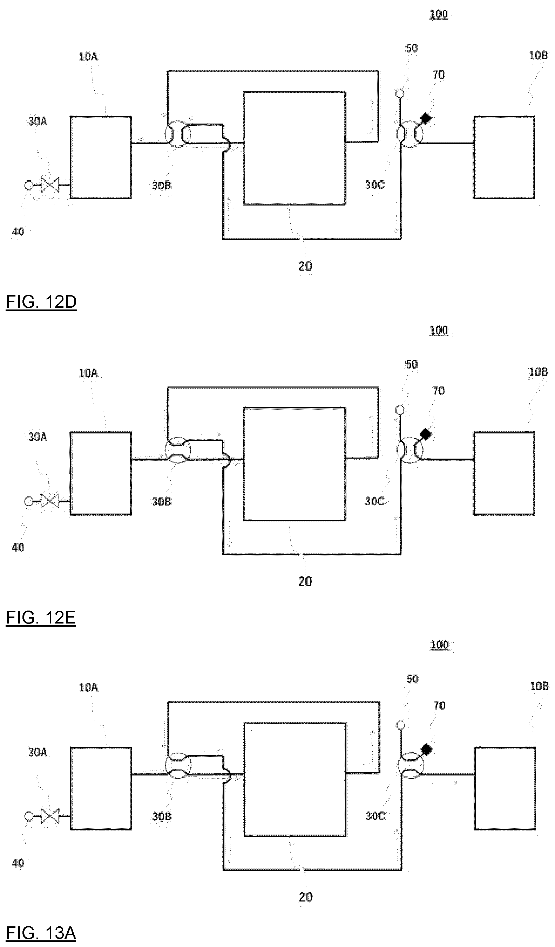

FIG. 12D is a flow diagram showing an example of a process for removing gases other than a specific gas component remaining in the first chamber in the device shown in FIG. 12A.
FIG. 12E is a flow diagram showing an example of a desorption process using the device shown in FIG. 12A.
FIG. 13A is a schematic diagram illustrating an example of a device according to another embodiment of the present invention.

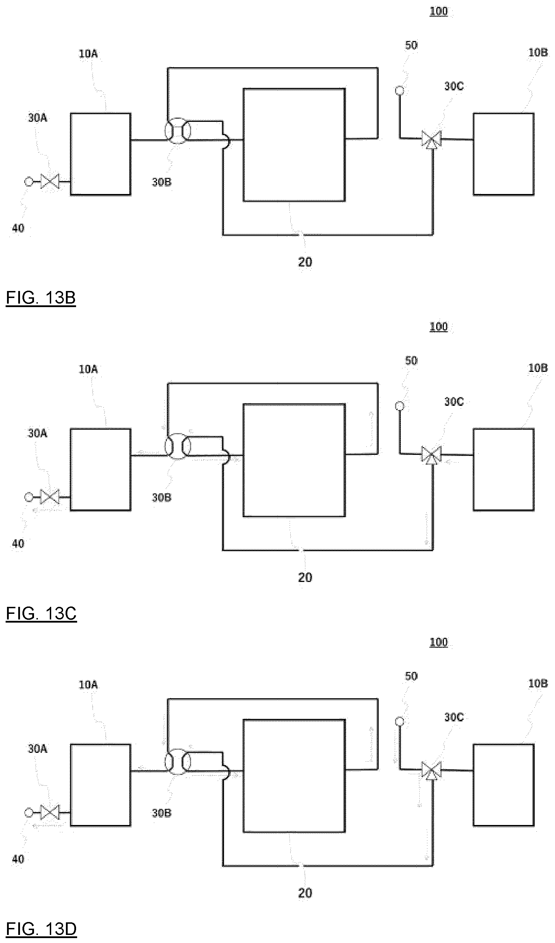

FIG. 13B is a flow diagram showing an example of a process for removing gas from the second chamber in the device shown in FIG. 13A.
FIG. 13C is a flow diagram showing an example of an adsorption process using the device shown in FIG. 13A.
FIG. 13D is a flow diagram showing an example of a process for removing gases other than a specific gas component remaining in the first chamber in the device shown in FIG. 13A.

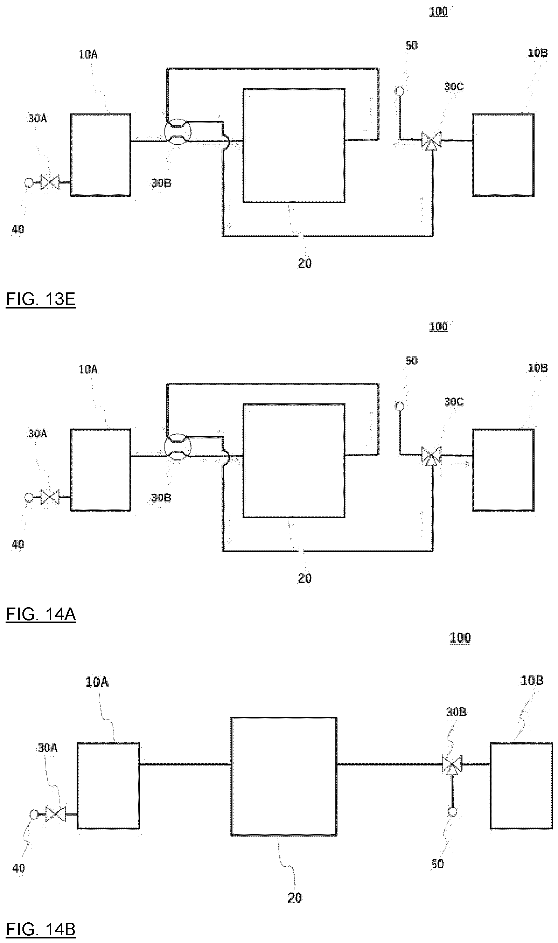

FIG. 13E is a flow diagram showing an example of a desorption process using the device shown in FIG. 13A.
FIG. 14A is a schematic diagram illustrating an example of a device according to another embodiment of the present invention.
FIG. 14B is a flow diagram showing an example of an adsorption process using the device shown in FIG. 14A.

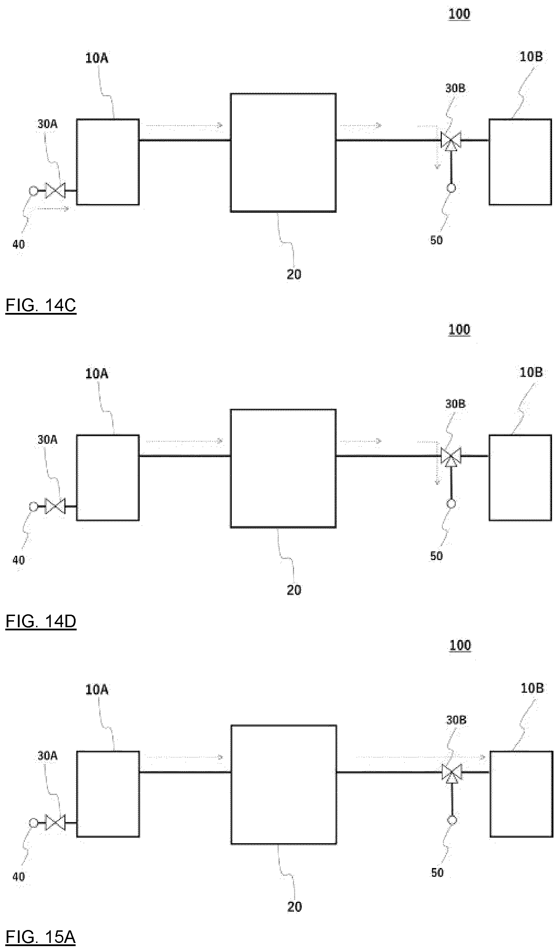

FIG. 14C is a flow diagram showing an example of a process for removing gases other than a specific gas component remaining in the first chamber in the device shown in FIG. 14A.
FIG. 14D is a flow diagram showing an example of a desorption process using the device shown in FIG. 14A.
FIG. 15A is a schematic diagram illustrating an example of a device according to another embodiment of the present invention.

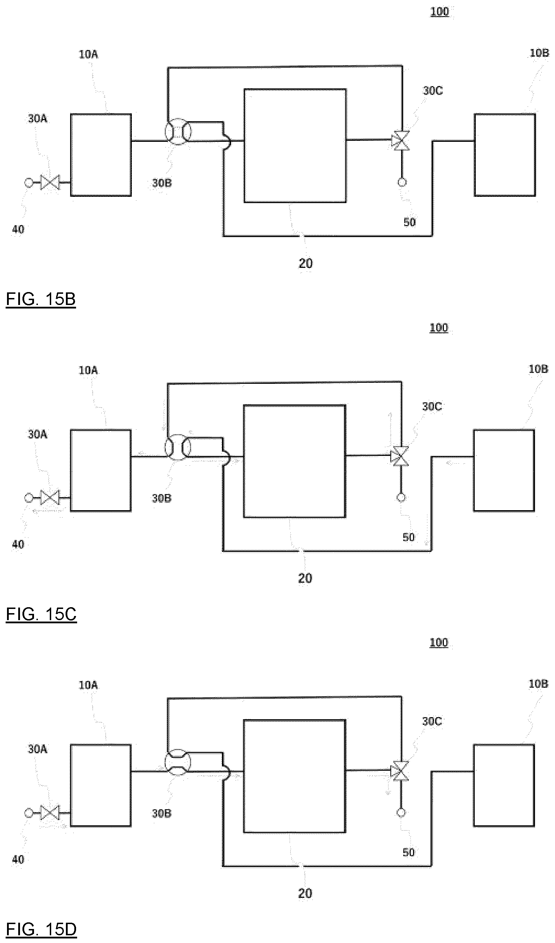

FIG. 15B is a flow diagram showing an example of a process for removing gas from the second chamber in the device shown in FIG. 15A.
FIG. 15C is a flow diagram showing an example of an adsorption process using the device shown in FIG. 15A.
FIG. 15D is a flow diagram showing an example of a process for removing gases other than a specific gas component remaining in the first chamber in the device shown in FIG. 15A.

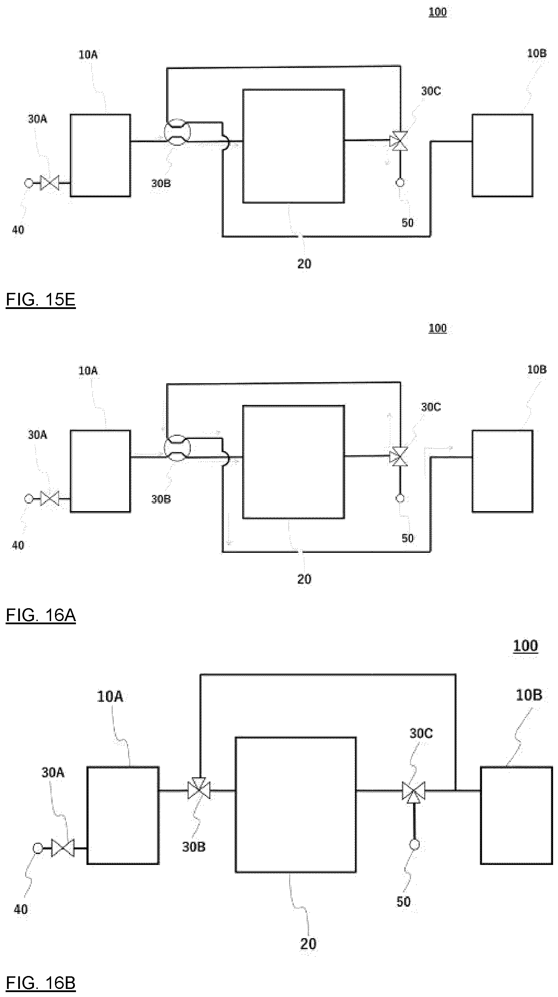

FIG. 15E is a flow diagram showing an example of a desorption process using the device shown in FIG. 15A.
FIG. 16A is a schematic diagram illustrating an example of a device according to another embodiment of the present invention.
FIG. 16B is a flow diagram showing an example of a process for removing gas from the second chamber in the device shown in FIG. 16A.

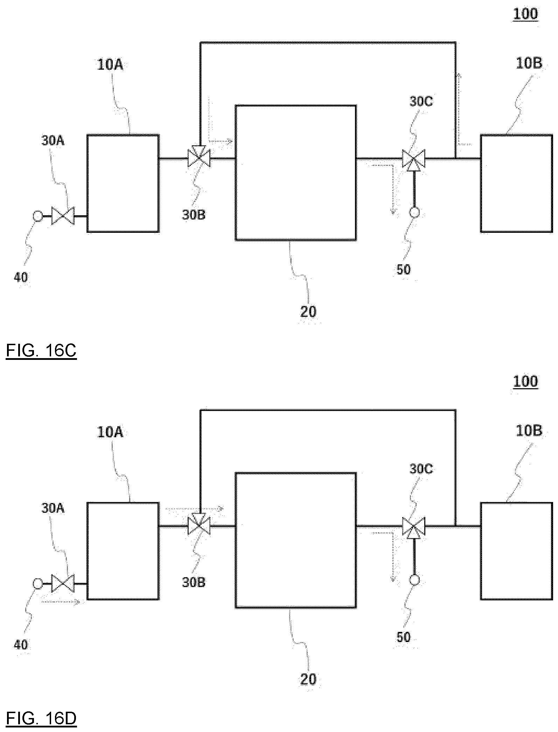

FIG. 16C is a flow diagram showing an example of an adsorption process using the device shown in FIG. 16A.
FIG. 16D is a flow diagram showing an example of a process for removing gases other than a specific gas component remaining in the first chamber in the device shown in FIG. 16A.

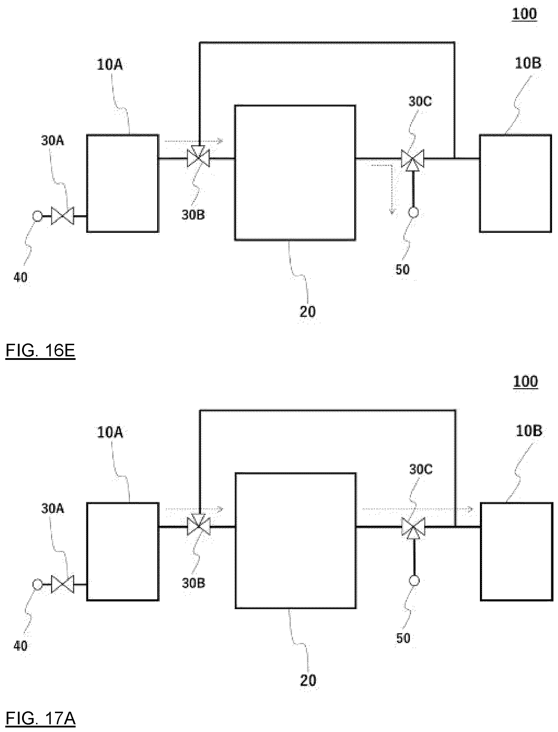

FIG. 16E is a flow diagram showing an example of a desorption process using the device shown in FIG. 16A.
FIG. 17A is a schematic diagram illustrating an example of a device according to another embodiment of the present invention.

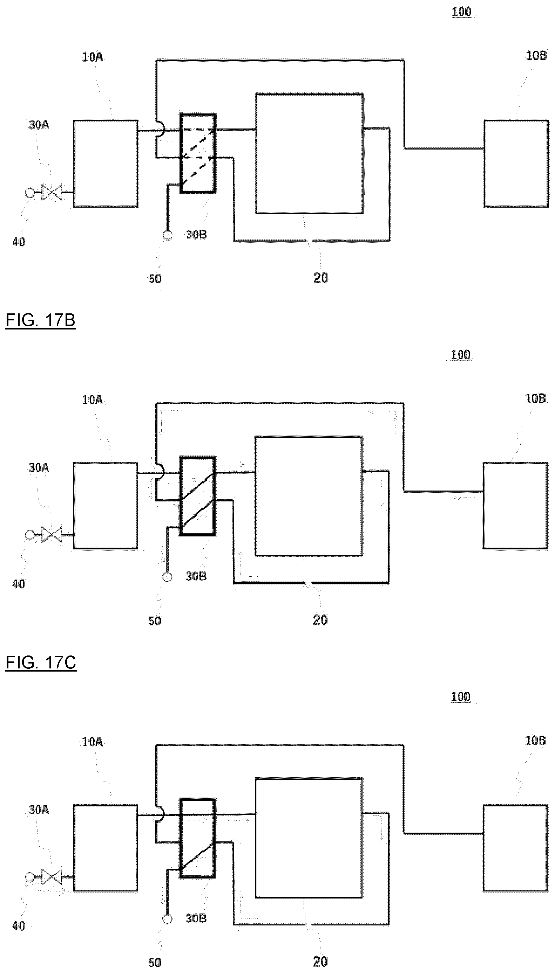

FIG. 17B is a flow diagram showing an example of a process for removing gas from the second chamber in the device shown in FIG. 17A.
FIG. 17C is a flow diagram showing an example of an adsorption process using the device shown in FIG. 17A.

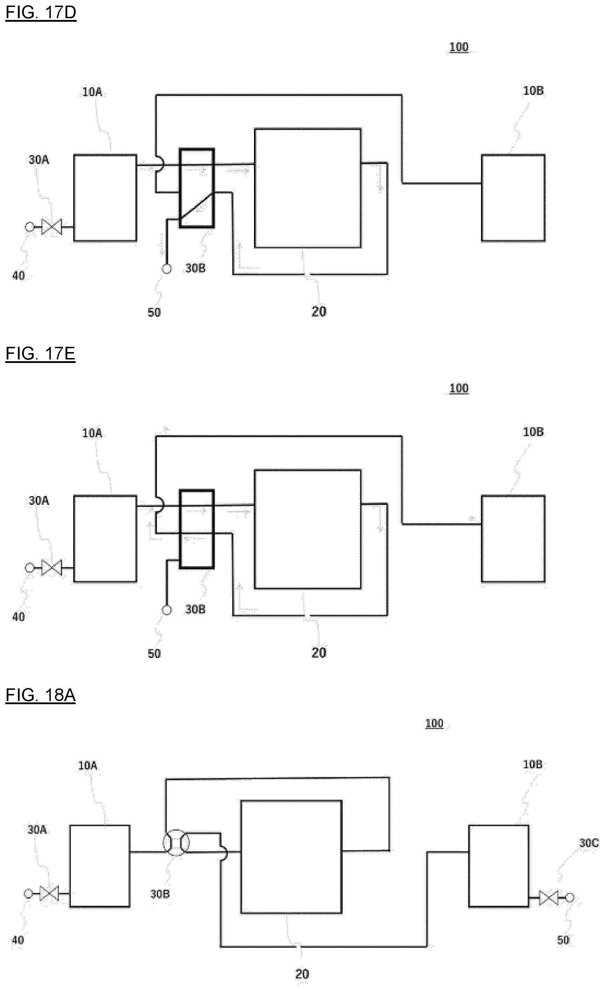

FIG. 17D is a flow diagram showing an example of a process for removing gases other than a specific gas component remaining in the first chamber in the device shown in FIG. 17A.
FIG. 17E is a flow diagram showing an example of a desorption process using the device shown in FIG. 17A.
FIG. 18A is a schematic diagram illustrating an example of a device according to another embodiment of the present invention.

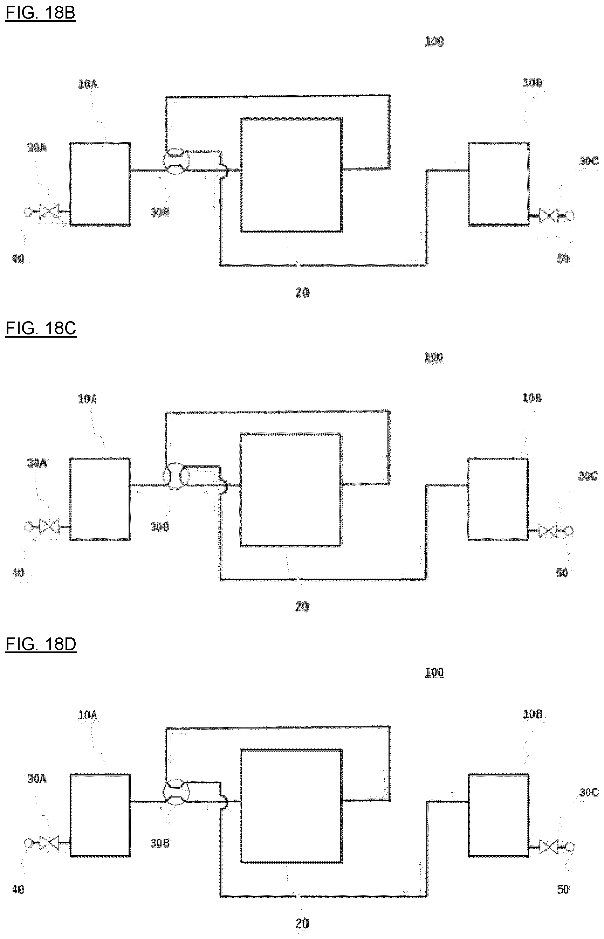

FIG. 18B is a flow diagram showing an example of an adsorption process using the device shown in FIG. 18A.
FIG. 18C is a flow diagram showing an example of a process for removing gas from the second chamber in the device shown in FIG. 18A.
FIG. 18D is a flow diagram showing an example of a desorption process using the device shown in FIG. 18A.

### DESCRIPTION OF EMBODIMENTS

The device and method according to an embodiment of the present invention will hereinafter be described. When referring to the drawings, the same reference numerals are given to the components exhibiting the same or similar functions, and duplicate description will be omitted.

The device according to the present invention is a device for recovering a specific gas component from a mixed gas (a gas mixture). The device comprises a first chamber, a second chamber, and a pump.

The first chamber contains a solid adsorbent for adsorbing a specific gas component in the gas mixture. This solid adsorbent is configured to preferentially adsorb the specific gas component among the multiple gas components that make up the mixed gas.

The type of mixed gas is not particularly limited as long as it contains the specific gas component. The gas mixture may be, for example, air or gases exhausted from point sources such as equipment and industrial facilities. The air as the mixed gas may be dry air.

There are no limitations on the type of specific gas component. The specific gas component may be, for example, a greenhouse gas and/or a harmful gas. The specific gas component to be immobilized can be appropriately selected depending on the adsorption capacity of the solid adsorbent described below. The specific gas component to be recovered may include a plurality of gas components.

Greenhouse gases include, for example, carbon dioxide, methane, nitrous oxide, chlorofluorocarbons, and other fluorides. Examples of fluorocarbons include hydrofluorocarbons (HFCs) and perfluorocarbons (PFCs). Examples of fluorides include sulfur hexafluoride (SF₆) and nitrogen trifluoride (NF₃).

Harmful gases include, for example, gases whose emissions are subject to regulations in accordance with the laws of each country. Specific examples of harmful gases or components thereof include fluorine and its compounds, hydrogen cyanide, formaldehyde, hydrogen chloride, acrolein, chlorine, bromine and its compounds, methyl bromide, nitrogen oxides, phenol, sulfuric acid (including sulfur trioxide), chromium compounds, chlorosulfonic acid, pyridine, styrene, ethylene, carbon disulfide, chloropicrin, dichloromethane, 1,2-dichloroethane, chloroform, vinyl chloride monomer, ethylene oxide, arsenic and its compounds, manganese and its compounds, nickel and its compounds, cadmium and its compounds, lead and its compounds, methanol, isoamyl alcohol, isopropyl alcohol, acetone, methyl ethyl ketone, methyl isobutyl ketone, benzene, toluene, xylene, trichloroethylene, tetrachloroethylene, methyl acetate, ethyl acetate, butyl acetate, and hexane. Harmful gases can also be greenhouse gases.

The mixed gas is typically air and the specific gas component is typically carbon dioxide. In this case, the device is used as a DAC device.

The temperature of the mixed gas introduced into the device is preferably 150°C or less, more preferably 100°C or less, and even more preferably 50°C or less. In general, since the gas adsorption reaction by a solid adsorbent is an exothermic reaction, it is preferable that the temperature of the mixed gas is not too high.

The pressure of the mixed gas introduced into the device at the inlet to the first chamber is preferably 1 atm or more, more preferably 2 atm or more. The higher the pressure of the mixed gas, the easier it is for the gas to be adsorbed by the solid adsorbent.

The content (volume fraction) of the specific gas component in the mixed gas is preferably 100 ppb or more, and more preferably 1 ppm or more. The higher this content, the easier it is for a specific gas component to be adsorbed by the solid adsorbent. For example, the content of nitrous oxide in the air is about 330 ppb, and the content of carbon dioxide therein is about 400 ppm.

There is no particular limitation on the type of solid adsorbent. The solid adsorbent may be configured to physically adsorb a specific gas component, or may be configured to chemically adsorb a specific gas component. As the porous material, for example, a metal-organic framework (hereinafter also referred to as MOF), activated carbon, zeolite, mesoporous silica, or the like can be used. A plurality of solid adsorbents may be used in combination.

It is particularly preferred that the solid adsorbent comprises a metal-organic framework. Metal-organic frameworks are superior in designability compared to other solid adsorbents. That is, when a metal organic framework is used, the adsorption amount and selectivity for a specific gas component in a mixed gas can be optimized by appropriately selecting a combination of a metal ion and a ligand. This makes it possible to improve the recovery amount and purity of a specific gas component from a mixed gas.

When the MOF is employed as the porous material, any types of MOFs can be used. Appropriately combining the type and coordination number of the metal ion with the type and topology of the multidentate ligand leads to a MOF with a desired structure.

The metal elements in the MOF can be, for example, any elements belonging to alkali metals (Group 1), alkaline earth metals (Group 2), or transition metals (Groups 3 to 12). The multidentate ligand in the MOF typically is an organic ligand, examples of which include carboxylate anion and heterocyclic compound. Examples of the carboxylic acid anion include dicarboxylic acid anion and tricarboxylic acid anion. Specific examples include anions of citric acid, malic acid, terephthalic acid, isophthalic acid, trimesic acid, and derivatives thereof. Examples of the heterocyclic compound include bipyridine, imidazole, adenine, and derivatives thereof. Alternatively, the ligand may be an amine compound, a sulfonate anion, or a phosphate anion. The MOF may further contain monodentate ligand(s).

As described above, the combination of the metal and the ligand forming the MOF can be appropriately determined according to the expected function and the desired pore size. The MOF may contain two or more types of metal elements, and may contain two or more types of ligands. The MOF can be surface-modified with a polymer or other modifiers.

There are no particular limitations on the shape of the solid adsorbent. The solid adsorbent may be in the form of a powder or a processed body. In the latter case, the solid adsorbent may be, for example, in the form of pellets, beads, plates, disks, hollow cylinders, or membranes. A plurality of forms of porous materials may be used in combination. The solid adsorbent is more preferably in the form of a processed body for the purpose of reducing the effect of pressure loss due to clogging of piping. The solid adsorbent may further comprise a support and/or a binder.

There are no particular limitations on the shape and structure of the first chamber. There are no particular limitations on the material that comprises the first chamber. The exterior material of the first chamber may be, for example, metal or enamel, and may include stainless steel, iron, aluminum, or titanium. The first chamber may further include a sealant in the sealing portion.

The internal volume of the first chamber can be appropriately determined taking into consideration the volume of the solid adsorbent and the free volume that serves as a flow path for the mixed gas. The volume ratio of the solid adsorbent to the internal volume of the first chamber can be, for example, 10 to 95%, preferably 30 to 90%, and more preferably 40 to 85%. If this ratio is excessively small, the amount of the specific gas component adsorbed onto the solid adsorbent will be small, and the specific gas component desorbed from the solid adsorbent will tend to remain in the free volume portion of the first chamber. If this ratio is excessively large, it becomes difficult to uniformly flow the mixed gas inside the first chamber, and the amount of a specific gas component adsorbed on the solid adsorbent may be reduced. By appropriately designing the above ratio, the amount of gas recovered per unit time can be optimized.

The first chamber may include a structure for forming a gas flow path therein. The first chamber may also include a support for supporting the solid adsorbent. Additionally, the first chamber may include a heating device for heating the solid adsorbent, and may include a heating element as part of the heating device. The first chamber may include a thermal insulator. When the first chamber includes a heating device or a heating element, the solid adsorbent is preferably disposed in the vicinity of the heating device or the heating element. In this case, Joule heat from the heating device or heating element is efficiently transferred to the solid adsorbent, shortening the time required to desorb gas from the solid adsorbent and increasing the amount of gas recovered per unit time.

The first chamber typically has a gas exhaust port. By passing the mixed gas through the solid adsorbent and immediately discharging the mixed gas from the gas exhaust port, in which the concentration of the specific gas component to be recovered has been reduced, the time required for the gas to be adsorbed by the solid adsorbent is shortened, and the amount of gas recovered per unit time is increased. It is preferable that the gas exhaust port be configured so that it can be switched between open and closed states. The gas exhaust port may be configured so that the gas discharged from the exhaust port can be supplied again to the gas inlet, which will be described later. The first chamber may further comprise, instead of or in addition to the exhaust port, a gas inlet for supplying the mixed gas to the device. In this case, the gas inlet port may be the same as the gas exhaust port. That is, the first chamber may be provided with a connection port that can be used as both a gas exhaust port and a gas inlet.

A device according to one aspect of the invention may include a plurality of first chambers, each of which contains a solid adsorbent. In this case, the plurality of first chambers may be connected in parallel or in series in the above-mentioned device. In the former case, for example, after adsorption and desorption are performed using a certain first chamber, adsorption and desorption can be performed using another first chamber. When such a configuration is employed, for example, it becomes possible to allow the primary first chamber to stand or be cooled while the secondary first chamber is being used. Therefore, in this case, the time loss in the recovery process due to the cooling of the first chamber can be minimized. In this case, it is possible to further increase the amount of gas recovered per unit time. When there are a plurality of first chambers, these chambers are preferably configured so that they can be switched between for use. The device may further include two or more first chambers, or may include three or more first chambers. Each of the multiple first chambers may contain a different type and/or amount of solid adsorbent.

The second chamber is configured to store or utilize the specific gas component desorbed from the solid adsorbent. That is, the second chamber is configured to store or utilize the specific gas component recovered from the first chamber. The second chamber may be a storage tank for the specific gas component or the specific gas component may be directly utilized in the second chamber. The second chamber may be configured to be separable from the device. The device according to an aspect of the present invention may further include a plurality of second chambers.

There is no particular limitation on how the recovered specific gas component may be utilized. For example, if the specific gas component is carbon dioxide, the captured carbon dioxide can be used for beverages, agriculture, dry ice production, chemical reactions, or the like. Alternatively, the specific gas components that have been collected can be buried underground or rendered harmless at a specific facility.

There are no particular limitations on the shape and structure of the second chamber, and on the material that constitutes it. The exterior of the second chamber may, for example, be constructed of the same material as the first chamber. The second chamber may further include a sealant in the sealing portion.

The internal volume of the second chamber can be appropriately determined based on the amount of gas transferred from the first chamber. Prior to the start of the collection cycle, the second chamber may be under a vacuum of 0.1 atm or less. Such a vacuum may be created using the same pump that is used to transfer gas from the first chamber to the second chamber, as described below. Such an arrangement can make the device smaller.

The second chamber may have a gas exhaust port. In this case, it is easier to further transfer a specific gas component from the second chamber. It is preferable that the gas exhaust port be configured so that it can be switched between open and closed states.

A pump is provided between the first and second chambers and is used to transport a specific gas component from the first chamber to the second chamber. In the configuration of the device according to the present embodiment, when a certain unit is provided "between A and B," it means that the unit exists "between A and B" on a gas flow diagram, and the physical installation position of the unit does not necessarily have to be "between A and B."

In the device according to the invention, the pump is used not only to transport a specific gas component from a first chamber to a second chamber, but also to feed a mixed gas into the first chamber. That is, in this device, the same pump is used to introduce the mixed gas into the first chamber and to transport a specific gas component from the first chamber to the second chamber.

As described above, the present inventors have found that, when the gas recovery operation is repeatedly performed in the conventional apparatus, fine powder generated from the solid adsorbent adheres to the pump, which can cause malfunctions. However, the present inventors have discovered that such problems can be solved by using the pump used to transport a specific gas component from the first chamber to the second chamber also to introduce the mixed gas into the first chamber. The mechanism is as follows.

The fine powder generated from the solid adsorbent by the repetition of the gas recovery process floats in the gas transferred from the first chamber to the second chamber and is sent to the pump. In this case, the fine powder may adhere to the pump. That is, repeated use of a pump to transfer a specific gas component from a first chamber to a second chamber can result in a buildup of fine powders in the pump. The presence of fine powders can then degrade the pump's function and adversely affect the overall performance of the device.

However, in the device according to the invention, the pump is also used to introduce the mixed gas into the first chamber. When such a configuration is adopted, a large amount of mixed gas passes through the pump each time the recovery cycle is repeated. Such ventilation can prevent accumulation of fine powder inside the pump. Therefore, the occurrence of malfunctions in the pump can be reduced, and the frequency of maintenance can be significantly reduced.

Here, the mixed gas is the gas itself that is introduced into the device for the purpose of recovering a specific gas component. Therefore, the above-mentioned "cleaning" of the pump can be performed without the need for additional steps. That is, in this device, the pump can be cleaned at the same time as the essential step of introducing the mixed gas into the first chamber. Therefore, by adopting such a configuration, it is possible to reduce the time and/or frequency required for pump maintenance without adding any additional steps, and to increase the amount of gas recovered per hour.

The mixed gas typically contains many components other than the specific gas component to be recovered. Furthermore, the entire amount of a specific gas component in the mixed gas fed into the first chamber is not necessarily adsorbed by the solid adsorbent. Therefore, the amount of the mixed gas fed to the first chamber is typically in excess of the amount of gas desorbed from the solid adsorbent and transferred to the second chamber. For example, when the device according to the present embodiment is used to recover carbon dioxide from the atmosphere containing carbon dioxide at a concentration of 400 ppm, the amount of mixed gas sent to the first chamber until the amount of gas adsorbed in the solid adsorbent becomes saturated can be as much as about 2,000 times the amount of gas adsorbed in the solid adsorbent. That is, the amount of gas mixture introduced, which also acts to clean the pump, is often overwhelmingly excessive compared to the amount of gas passed through the pump during the transfer process, which causes the build-up of fine particles.

In this way, the pump is automatically cleaned with an excess amount of mixed gas during each recovery cycle, so that the inside of the pump can always be kept clean in this device. This significantly reduces the frequency of pump maintenance and extends the life of the pump. It is also possible to reduce the amount of fine powder passing through the pump to reach the second chamber, thereby improving the purity of the specific gas components in the second chamber.

Furthermore, the pump described above are the same as those used to transport a specific gas component from the first chamber to the second chamber. That is, in this device, the mixed gas can be introduced into the first chamber without using an additional unit such as a fan. The fan used to introduce the mixed gas is large in scale and accounts for a large proportion of the cost of the device. Therefore, if the fan can be omitted, the device can be made smaller and the cost of the device can be reduced. It must be noted, however, in the device according to this embodiment, it is also possible to use additional units such as a fan in combination. Even in this case, if the size of the required fan can be reduced, it is possible to achieve a smaller device and lower costs.

The pump may be configured so that it can also be used to remove gases other than the specific gas component remaining in the first chamber. Such an arrangement allows the purity of a specific gas component to be transferred to the second chamber to be increased without increasing the number of device components. Furthermore, since the proportion of the desorbed gas in the gas to be transported can be increased, the time required for transporting the gas by a pump is reduced, and the efficiency of recovering the desorbed gas is increased. It should be noted that the removal of remaining gas from the first chamber may be performed using another pump.

The pump may also be configured to be used to remove gas from the second chamber. By employing such a configuration, gas can be removed from the second chamber without increasing the number of components in the device. Removal of gas from the second chamber may be performed, for example, to evacuate the second chamber prior to use of the device. Alternatively, removal of gas from the second chamber may be performed to transport a specific gas component stored in the second chamber out of the system. It should be noted that the removal of gas from the second chamber may be performed using another pump.

The pump is typically a vacuum pump, preferably a vacuum pump that can also be used as a compressor. In the latter case, since there is no need for an intermediate tank or a compressor for boosting pressure, the amount of gas recovered per hour can be further increased. Furthermore, by adopting a configuration in which the gas to be collected can be made high pressure, it is possible to reduce the volume of the second chamber as necessary. These features make it possible to achieve a compact device.

The pump is preferably capable of achieving a vacuum of, for example, 0.05 atm or less, more preferably 0.01 atm or less. By adopting such a configuration, the desorption rate of a specific gas component from the solid adsorbent can be further increased. As the pump, for example, a gas transport type vacuum pump or a gas storage type vacuum pump can be used. As the gas transport vacuum pump, for example, a reciprocating pump can be used. The pump is preferably an oil-free vacuum pump to minimize the effect of moisture in the gas on performance.

In the device according to this aspect, the first chamber, the second chamber, and the pump are typically connected to each other by piping. Some examples of connection methods will be described in detail below with reference to the drawings.

There are no particular limitations on the shape, structure, and material of the piping. The total internal volume of the piping is preferably 0.5% to 50% of the internal volume of the first chamber, and more preferably 1% to 30%. If this ratio is too small, the piping may be easily clogged with fine powder derived from the solid adsorbent, which may increase the frequency of maintenance of the device. If this ratio is too large, the volume of gas remaining in the passage will be large, and the amount of gas recovered may decrease.

The device according to this aspect may further comprise at least one valve for varying the flow of gas through the device. The valves are used, for example, to control gas flow paths, flow rates, and pressures. The valve may be located, for example, anywhere between the first and second chambers. The valve may be, for example, a globe valve, a ball valve, a gate valve, or a butterfly valve. A combination of valve types may be used.

The device according to this aspect may further include a controller (a control unit) for controlling the operation of the device. The controller may be configured to control, for example, the pressure and temperature of the first chamber, the pressure and temperature of the second chamber, the strength of the pump, and the operation of the valves. By adopting such a configuration, it becomes possible to automate or semi-automate the gas recovery process by the above-mentioned device.

The device according to this aspect may further comprise at least one filter. The filter is configured, for example, to capture at least a portion of the fine powder described above. The filter may be located anywhere between the first and second chambers, but is preferably located between the first chamber and the pump, and more preferably near the first chamber. With this configuration, at least a portion of the fine powder produced from the first chamber can be captured by the filter. Furthermore, if the filter is positioned so that the mixed gas passes toward the first chamber when the mixed gas is introduced, the introduction of the mixed gas by the pump can return at least a portion of the fine powder captured by the filter to the first chamber, typically allowing it to be discharged from the gas exhaust port of the first chamber. Therefore, by adopting such a configuration, it is possible to further reduce the amount of fine powder that reaches the pump, and further reduce the frequency of maintenance.

The device according to this aspect typically includes a gas inlet for supplying the mixed gas into the device. The gas inlet is preferably provided between the first chamber and the second chamber. In this case, it is possible to make the device more compact than when the gas inlet is provided on the opposite side of the first chamber from the second chamber. Alternatively, the gas inlet may be provided in the first chamber. In this case, for example, it is possible to provide a gas outlet, which will be described below, on the discharge side of the pump (i.e. the side of the pump opposite the first chamber). In this way, in the adsorption step described below, the gas that has passed through the solid adsorbent contained in the first chamber and has a reduced concentration of a specific gas component can be discharged from the gas outlet. In this case, the back pressure of the pump becomes close to atmospheric pressure, so that the pump does not need to perform a pressure increasing operation. Therefore, in this case, the load on the pump is reduced, and the time and/or frequency required for pump maintenance can be reduced. In this case, the need for a pump to boost the pressure is eliminated, which can reduce the power consumption of the entire device. The above-mentioned device may be provided with a plurality of gas inlets.

The device according to this embodiment may further include a gas outlet for removing gases other than the specific gas component remaining in the first chamber. In this case, the gas outlet is preferably provided between the first chamber and the second chamber, and more preferably between the pump and the second chamber. The above-mentioned device may be provided with a plurality of gas outlets.

At least one of the gas inlets and at least one of the gas outlets may be common to each other. That is, at least one of the gas inlets may have a configuration that allows it to be used as a gas outlet for removing gases other than the specific gas component remaining in the first chamber. By adopting such a configuration, the device can be made simpler. In addition, when the gas inlet and the gas outlet are a common port, it is more preferable that the gas inlet (= gas outlet) is provided between the pump and the second chamber.

The method according to the present invention is a method for recovering a specific gas component from a mixed gas. This method includes a step of using a pump to feed the mixed gas into a solid adsorbent, thereby adsorbing a specific gas component in the mixed gas onto the solid adsorbent (hereinafter also referred to as an adsorption step), and a step of using the pump to desorb the specific gas component from the solid adsorbent (hereinafter also referred to as a desorption step).

The adsorption step is a process in which a specific gas component in a mixed gas is adsorbed onto a solid adsorbent. The mixed gas, the specific gas component, and the solid adsorbent may be the same as those described above.

In the adsorption step, the mixed gas is introduced using a pump. This pump is the same as the pump used in the desorption step. By adopting such a configuration, as described in detail above, it is possible to reduce the time and/or frequency of pump maintenance without adding additional processes, and to increase the amount of gas recovered per hour.

The solid adsorbent may be disposed within a specific chamber. As such a specific chamber, for example, a configuration similar to that described above for the first chamber can be adopted. Hereinafter, such a specific chamber will also be referred to as a first chamber. As mentioned above, the solid adsorbent may be disposed in a plurality of first chambers.

The desorption step is a process of desorbing the specific gas component from the solid adsorbent. This desorption step is typically accomplished by heating and/or reducing pressure on the solid adsorbent or the chamber containing it.

The desorbed gas component may be stored in a specific chamber or may be utilized in the specific chamber. As such a specific chamber, for example, a configuration similar to that described above for the second chamber can be adopted. Hereinafter, such a specific chamber will also be referred to as a second chamber. The method of utilizing the recovered specific gas components is the same as that described above.

When the solid adsorbent is held in the first chamber, the method according to one aspect of the present invention may further include a step of removing gas other than the specific gas component remaining in the first chamber (hereinafter also referred to as a removal step from the first chamber) between the adsorption step and the desorption step. Adding such a step can improve the purity of the specific gas component recovered from the first chamber. Furthermore, since the proportion of the gas desorbed from the solid adsorbent in the total gas to be transported can be increased, the time required for transporting the gas by a pump is reduced, and the efficiency of recovering the desorbed gas is increased.

The step of removing residual gas from the first chamber is preferably carried out using the same pump as is used in the adsorption and desorption steps. By adopting such a configuration, the above-mentioned effects can be achieved without increasing the number of components of the device.

The method according to one aspect of the present invention may further include the step of transporting the specific gas component desorbed from the solid adsorbent to a second chamber. For example, the method may include transporting the specific gas component from a first chamber to a second chamber. Such transport steps are typically carried out using the same pumps used in the adsorption and desorption steps. By employing such a configuration, it becomes possible to transport a specific gas component to a desired location without increasing the number of components of the device.

The method according to one aspect of the present invention may further include a step of removing gas from the second chamber (hereinafter also referred to as a removal step from the second chamber). This step is carried out, for example, before the desorption step, preferably before the adsorption step. By removing gas from the second chamber prior to transporting the specific gas component to the second chamber, the purity of the specific gas component recovered in the second chamber can be improved. Furthermore, since the second chamber can be kept at a low pressure, the time required for gas transfer is reduced, and the efficiency of recovery of the desorbed gas is increased. The removal of gas from the second chamber may be performed in order to transport a specific gas component stored in the second chamber out of the system.

The step of removing gas from the second chamber is preferably carried out using the same pump as is used in the adsorption and desorption steps. By adopting such a configuration, the above-mentioned effects can be achieved without increasing the number of components of the device.

Specific examples of the configuration of the device and method will be described below. These are merely examples, and other modifications may be adopted within the scope of the invention. In the methods exemplified below, steps other than the adsorption step and the desorption step can be omitted as appropriate.

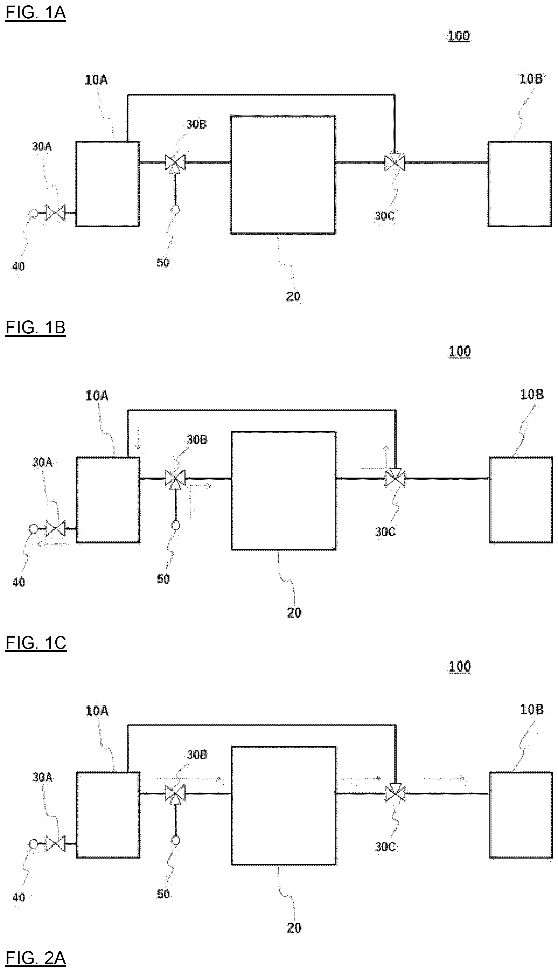

FIG. 1A is a schematic diagram illustrating an example of a device according to one embodiment of the present invention. FIG. 1B is a flow diagram showing an example of an adsorption process using the device shown in FIG. 1A. FIG. 1C is a flow diagram showing an example of a desorption process using the device shown in FIG. 1A.

The gas recovery device 100 shown in FIG. 1A includes a first chamber 10A, a second chamber 10B, a pump 20, valves 30A/30B/30C, an exhaust port 40, and a gas inlet 50.

In the device 100, a first chamber 10A, a pump 20, and a second chamber 10B are connected in this order by piping. The first chamber 10A is connected to an exhaust port 40 via a two-way valve 30A. A three-way valve 30B is provided between the first chamber 10A and the pump 20, and branches off to a gas inlet 50. A three-way valve 30C is provided between the pump 20 and the second chamber 10B, and branches off to the first chamber 10A. The second chamber 10B may be provided with an exhaust port (not shown).

In the adsorption step shown in FIG. 1B, the valve 30A is open, the valve 30B connects the gas inlet 50 to the pump 20, and the valve 30C connects the pump 20 to the first chamber 10A. In this step, first, a mixed gas is introduced from a gas inlet 50 as shown by a dashed arrow in FIG. 1B. The introduction of the mixed gas is carried out by a pump 20 . The mixed gas that has passed through the pump 20 passes through the valve 30C and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system.

In this adsorption step, the first chamber 10A is set, for example, at room temperature and at a pressure of 1 to 10 atm. The second chamber 10B is set, for example, at room temperature and at a pressure of 0.01 to 0.05 atm. The same applies to similar steps that will be described below with reference to other figures regarding a configuration in which a gas inlet is provided between a first chamber and a second chamber.

In the desorption step shown in FIG. 1C, the valve 30A is closed, the valve 30B connects the first chamber 10A to the pump 20, and the valve 30C connects the pump 20 to the second chamber 10B. In this step, as shown by the dashed arrow in FIG. 1C, at least a portion of the specific gas component desorbed from the solid adsorbent in the first chamber 10A is transferred by the pump 20 to the second chamber 10B.

In this desorption step, the first chamber 10A is set to, for example, a temperature of room temperature to 100°C and a pressure of 0.01 to 0.05 atm. At the start of desorption, the second chamber 10B has a temperature of, for example, room temperature and a pressure of 0.01 to 0.05 atm. At the end of desorption, the second chamber 10B has a temperature of, for example, room temperature to 100° C and a pressure of 1 to 10 atm. The same applies to similar steps described below with reference to other figures.

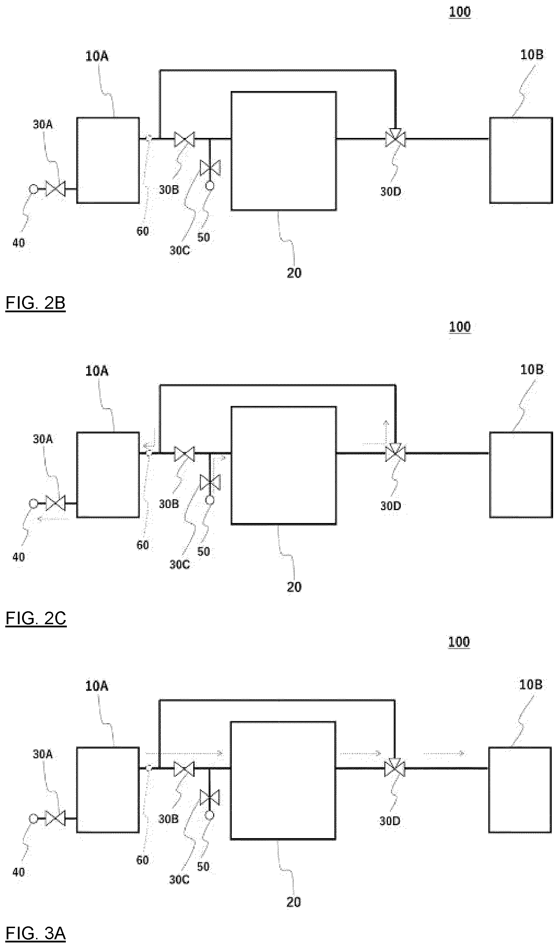

FIG. 2A is a schematic diagram illustrating an example of a device according to another embodiment of the present invention. FIG. 2B is a flow diagram showing an example of an adsorption process using the device shown in FIG. 2A. FIG. 2C is a flow diagram showing an example of a desorption process using the device shown in FIG. 2A.

The gas recovery device 100 shown in FIG. 2A includes a first chamber 10A, a second chamber 10B, a pump 20, valves 30A/30B/30C/30D, an exhaust port 40, a gas inlet 50, and a filter 60.

In the device 100, a first chamber 10A, a pump 20, and a second chamber 10B are connected in this order by piping. The first chamber 10A is connected to an exhaust port 40 via a two-way valve 30A. A two-way valve 30B is provided between the first chamber 10A and the pump 20. Between the two-way valve 30B and the pump 20, the piping branches off, and this branched piping is provided with a two-way valve 30C and connected to a gas inlet 50. A three-way valve 30D is provided between the pump 20 and the second chamber 10B, and branches to a junction with the piping between the first chamber 10A and the pump 20. This junction is located between the first chamber 10A and the valve 30B. A filter 60 is provided between the first chamber 10A and this junction point.

In the adsorption step shown in FIG. 2B, valve 30A is open and valve 30B is closed. The valve 30C connects gas inlet 50 and pump 20, and valve 30D connects pump 20 and first chamber 10A via the above-mentioned junction. In this step, as indicated by the dashed arrow in FIG. 2B, first, a mixed gas is introduced from the gas inlet 50 via the valve 30C. The introduction of the mixed gas is carried out by a pump 20 . The mixed gas that has passed through the pump 20 passes through the valve 30D and the filter 60 and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system.

In the desorption step shown in FIG. 2C, the valves 30A and 30C are closed, the valve 30B connects the first chamber 10A to the pump 20, and the valve 30D connects the pump 20 to the second chamber 10B. In this step, as shown by the dashed arrow in FIG. 2C, at least a portion of the specific gas component desorbed from the solid adsorbent in the first chamber 10A is transferred by the pump 20 to the second chamber 10B. At this time, the gas containing this specific gas component passes through the filter 60.

Although the case where the filter 60 is used has been described with reference to FIGs. 2A to 2C, the filter 60 may be omitted. Alternatively, such a filter may be provided elsewhere in the device. The filter 60 may also be installed as appropriate in the configurations shown in the other figures.

Furthermore, in the configuration shown in FIGs. 2A to 2C, there is only one connection point between the first chamber 10A and the piping (except for the connection to the exhaust port). By adopting such a configuration, compared to the configurations shown in, for example, FIGs. 1A to 1C, the piping between the first chamber and the above-mentioned junction is less likely to become clogged with fine powder, thereby reducing the frequency of maintenance of the device.

FIG. 3A is a schematic diagram illustrating an example of a device according to another embodiment of the present invention. FIG. 3B is a flow diagram showing an example of an adsorption process using the device shown in FIG. 3A. FIG. 3C is a flow diagram showing an example of a desorption process using the device shown in FIG. 3A.

The gas recovery device 100 shown in FIG. 3A includes a first chamber 10A, a second chamber 10B, a pump 20, valves 30A/30B/30C, an exhaust port 40, and a gas inlet 50.

In the device 100, a first chamber 10A, a pump 20, and a second chamber 10B are connected in this order by piping. The first chamber 10A is connected to an exhaust port 40 via a two-way valve 30A. A three-way valve 30B is provided between the first chamber 10A and the pump 20, and branches off to a gas inlet 50. A three-way valve 30C is provided between the pump 20 and the second chamber 10B, and branches to a junction with the piping between the first chamber 10A and the pump 20. This junction is located between the first chamber 10A and the valve 30B.

In the adsorption process shown in FIG. 3B, valve 30A is open, valve 30B connects gas inlet 50 to pump 20, and valve 30C connects pump 20 to first chamber 10A via the above-mentioned junction. In this step, as indicated by the dashed arrow in FIG. 3B, first, a mixed gas is introduced from the gas inlet 50 via the valve 30B. The introduction of the mixed gas is carried out by a pump 20 . The mixed gas that has passed through the pump 20 passes through the valve 30C and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system.

In the desorption step shown in FIG. 3C, the valve 30A is closed, the valve 30B connects the first chamber 10A to the pump 20, and the valve 30C connects the pump 20 to the second chamber 10B. In this step, as shown by the dashed arrow in FIG. 3C, at least a portion of the specific gas component desorbed from the solid adsorbent in the first chamber 10A is transferred by the pump 20 to the second chamber 10B.

The configuration shown in FIGs. 3A-3C requires fewer valves than, for example, the configuration shown in FIGs. 2A-2C. By adopting such a configuration, the device can be made simpler.

FIG. 4A is a schematic diagram illustrating an example of a device according to another embodiment of the present invention. FIG. 4B-1 is a flow diagram showing an example of an adsorption process using the device shown in FIG. 4A. FIG. 4B-2 is a flow diagram showing another example of the adsorption process using the device shown in FIG. 4A. FIG. 4C is a flow diagram showing an example of a process for removing gases other than the specific gas component remaining in the first chamber in the device shown in FIG. 4A. FIG. 4D is a flow diagram showing an example of a desorption process using the device shown in FIG. 4A.

The gas recovery device 100 shown in FIG. 4A includes a first chamber 10A, a second chamber 10B, a pump 20, valves 30A/30B/30C/30D, an exhaust port (gas inlet) 40, a gas inlet 50A, and a gas outlet 50B.

In the device 100, a first chamber 10A, a pump 20, and a second chamber 10B are connected in this order by piping. The first chamber 10A is connected to an exhaust port (gas inlet) 40 via a two-way valve 30A. A three-way valve 30B is provided between the first chamber 10A and the pump 20, and branches off to a gas inlet 50A. A three-way valve 30C is provided between the pump 20 and the second chamber 10B, and branches to a junction with the piping between the first chamber 10A and the pump 20. This junction is located between the first chamber 10A and the valve 30B. A three-way valve 30D is provided between the three-way valve 30C and the second chamber 10B, and branches off to a gas outlet 50B.

In the adsorption step shown in FIG. 4B-1, a gas inlet 50A provided between the first chamber 10A and the second chamber 10B, and an exhaust port 40 provided in the first chamber 10A are used. In this example, valve 30A is open, valve 30B connects gas inlet 50A to pump 20, and valve 30C connects pump 20 to first chamber 10A via the junction mentioned above. That is, in this step, as shown by the dashed arrow in FIG. 4B-1, first, the mixed gas is introduced from the gas inlet 50A via the valve 30B. The introduction of the mixed gas is carried out by a pump 20 . The mixed gas that has passed through the pump 20 passes through the valve 30C and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system.

In the adsorption step shown in FIG. 4B-2, the gas inlet 40 provided in the first chamber 10A, and the gas outlet 50B provided between the first chamber 10A and the second chamber 10B are used. In this example, valve 30A is open, valve 30B connects first chamber 10A to pump 20, and valve 30C connects pump 20 to gas outlet 50B via valve 30D. That is, in this step, as shown by the dashed arrow in FIG. 4B-2, first, the mixed gas is introduced directly into the first chamber 10A from the gas inlet 40 via the valve 30A. The introduction of the mixed gas is carried out by a pump 20 . The first chamber 10A contains a solid adsorbent that adsorbs at least a portion of a specific gas component from the mixed gas. Most of the gas that is not adsorbed passes through valve 30B, pump 20, valve 30C, and valve 30D and is discharged from gas outlet 50B to the outside of the system.

In the adsorption process illustrated in FIG. 4B-2, the first chamber 10A is set to, for example, room temperature and 1 atm. The second chamber 10B is set, for example, at room temperature and at a pressure of 0.01 to 0.05 atm. The same applies to similar steps that will be described below with reference to other drawings regarding a configuration in which a gas inlet is provided in the first chamber.

In the removal process from the first chamber shown in FIG. 4C, valve 30A is closed, valve 30B connects first chamber 10A to pump 20, and valves 30C and 30D connect pump 20 to gas outlet 50B. In this step, as indicated by the dashed arrow in FIG. 4C, at least a portion of the gas remaining in the first chamber 10A is exhausted by the pump 20 to the outside of the system via the gas outlet 50B.

In this removal step from the first chamber, the first chamber 10A is set to, for example, a temperature of room temperature and a pressure of 0.01 to 0.05 atm. The second chamber 10B is set, for example, at room temperature and at a pressure of 0.01 to 0.05 atm. The same applies to similar steps described below with reference to other figures.

In the desorption step shown in FIG. 4D, the valve 30A is closed, the valve 30B connects the first chamber 10A to the pump 20, and the valves 30C and 30D connect the pump 20 to the second chamber 10B. In this step, as shown by the dashed arrow in FIG. 4D, at least a portion of the specific gas component desorbed from the solid adsorbent in the first chamber 10A is transferred by the pump 20 to the second chamber 10B.

In the configuration shown in FIGs. 4A to 4D, it is possible to remove gases other than the specific gas component remaining in the first chamber. Adding such a step can improve the purity of the specific gas component recovered from the first chamber. Furthermore, since the proportion of the gas desorbed from the solid adsorbent in the total gas to be transported can be increased, the time required for transporting the gas by a pump is reduced, and the efficiency of recovering the desorbed gas is increased. Furthermore, in the configurations shown in FIGs. 4A to 4D, when the adsorption process illustrated in Figure 4B-2 is adopted, as described above, the load on the pump 20 is reduced, and it is also possible to reduce the time and/or frequency required for maintenance of the pump 20.

FIG. 5A is a schematic diagram illustrating an example of a device according to another embodiment of the present invention. FIG. 5B-1 is a flow diagram showing an example of an adsorption process using the device shown in FIG. 5A. FIG. 5B-2 is a flow diagram showing another example of the adsorption process using the device shown in FIG. 5A. FIG. 5C is a flow diagram showing an example of a process for removing gases other than the specific gas component remaining in the first chamber in the device shown in FIG. 5A. FIG. 5D is a flow diagram showing an example of a desorption process using the device shown in FIG. 5A.

The gas recovery device 100 shown in FIG. 5A includes a first chamber 10A, a second chamber 10B, a pump 20, valves 30A/30B/30C, an exhaust port (gas inlet) 40, and a gas inlet (gas outlet) 50.

In the device 100, a first chamber 10A, a pump 20, and a second chamber 10B are connected in this order by piping. The first chamber 10A is connected to an exhaust port (gas inlet) 40 via a two-way valve 30A. A four-way valve 30B is provided between the first chamber 10A and the pump 20, and branches off to a gas inlet (gas outlet) 50. A three-way valve 30C is provided between the pump 20 and the second chamber 10B, and branches off to a four-way valve 30B between the first chamber 10A and the pump 20.

In the adsorption step shown in FIG. 5B-1, the gas inlet 50 provided between the first chamber 10A and the second chamber 10B and the exhaust port 40 provided in the first chamber 10A are used. In this example, valve 30A is open, valve 30B connects gas inlet 50 to pump 20, and valve 30C connects pump 20 to first chamber 10A via valve 30B. That is, in this step, as shown by the dashed arrow in FIG. 5B-1, first, the mixed gas is introduced from the gas inlet 50 via the valve 30B. The introduction of the mixed gas is carried out by a pump 20 . The mixed gas that has passed through the pump 20 passes through valves 30C and 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system.

In the adsorption step shown in FIG. 5B-2, the gas inlet 40 provided in the first chamber 10A and the gas outlet 50 provided between the first chamber 10A and the second chamber 10B are used. In this example, the valve 30A is open, the valve 30B connects the first chamber 10A to the pump 20, and the valve 30C connects the pump 20 to the gas outlet 50 via the valve 30B. That is, in this step, as shown by the dashed arrow in FIG. 5B-2, first, the mixed gas is introduced directly into the first chamber 10A from the gas inlet 40 via the valve 30A. The introduction of the mixed gas is carried out by a pump 20 . The first chamber 10A contains a solid adsorbent that adsorbs at least a portion of a specific gas component from the mixed gas. Most of the gas that is not adsorbed passes through valve 30B, pump 20, valve 30C, and valve 30B, and is discharged from gas outlet 50 to the outside of the system.

Note that, as the adsorption step using the device 100 shown in FIG. 5A, typically, only one of the adsorption step illustrated in FIG. 5B-1 and the adsorption step illustrated in FIG. 5B-2 is performed. The same applies to similar cases described below with reference to other figures.

In the removal process from the first chamber shown in FIG. 5C, valve 30A is closed, valve 30B connects first chamber 10A to pump 20, and valve 30C connects pump 20 to gas outlet 50 via valve 30B. In this step, as indicated by the dashed arrow in FIG. 5C, at least a portion of the gas remaining in the first chamber 10A is exhausted to the outside of the system via the gas outlet 50 by the pump 20. Here, the gas outlet 50 is the same as the gas inlet 50 used in the adsorption process illustrated in FIG. 5B-1. That is, when the adsorption process illustrated in FIG. 5B-1 is adopted, the gas inlet 50 is also used as a gas outlet 50 for removing gases other than the specific gas components remaining in the first chamber 10A.

In the desorption step shown in FIG. 5D, the valve 30A is closed, the valve 30B connects the first chamber 10A to the pump 20, and the valve 30C connects the pump 20 to the second chamber 10B. In this step, as shown by the dashed arrow in FIG. 5D, at least a portion of the specific gas component desorbed from the solid adsorbent in the first chamber 10A is transferred by the pump 20 to the second chamber 10B.

The configuration shown in FIGs. 5A-5D requires fewer valves than, for example, the configuration shown in FIGs. 4A-4D. In particular, in the configuration shown in FIGs. 5A to 5D, when the adsorption process illustrated in Figure 5B-1 is adopted, the gas outlet used to remove gas other than the specific gas component remaining in the first chamber is common to the gas inlet used to introduce the mixed gas. By adopting such a configuration, the device can be made simpler. On the other hand, in the configurations shown in FIGs. 5A to 5D, when the adsorption process illustrated in Figure 5B-2 is adopted, as described above, the load on the pump 20 is reduced, and it is possible to reduce the time and/or frequency required for maintenance of the pump 20.

FIG. 6A is a schematic diagram illustrating an example of a device according to another embodiment of the present invention. FIG. 6B-1 is a flow diagram showing an example of an adsorption process using the device shown in FIG. 6A. FIG. 6B-2 is a flow diagram showing another example of the adsorption process using the device shown in FIG. 6A. FIG. 6C is a flow diagram showing an example of a process for removing gases other than the specific gas component remaining in the first chamber in the device shown in FIG. 6A. FIG. 6D is a flow diagram showing an example of a desorption process using the device shown in FIG. 6A. FIG. 6E is a flow diagram showing an example of a process for recovering or removing gas in the second chamber in the device shown in FIG. 6A.

The gas recovery device 100 shown in FIG. 6A includes a first chamber 10A, a second chamber 10B, a pump 20, valves 30A/30B/30C/30D, an exhaust port (gas inlet) 40A, an exhaust port 40B, and a gas inlet (gas outlet) 50.

In the device 100, a first chamber 10A, a pump 20, and a second chamber 10B are connected in this order by piping. The first chamber 10A is connected to an exhaust port (gas inlet) 40A via a two-way valve 30A. A four-way valve 30B is provided between the first chamber 10A and the pump 20, and branches off to a gas inlet (gas outlet) 50. A four-way valve 30C is provided between the pump 20 and the second chamber 10B, and branches out to an exhaust port 40B and a four-way valve 30B. A two-way valve 30D is provided between the four-way valve 30C and the second chamber 10B.

In the adsorption step shown in FIG. 6B-1, the gas inlet 50 provided between the first chamber 10A and the second chamber 10B and the exhaust port 40A provided in the first chamber 10A are used. In this example, valve 30A is open, valve 30B connects gas inlet 50 to pump 20, and valve 30C connects pump 20 to first chamber 10A via valve 30B. That is, in this step, as shown by the dashed arrow in FIG. 6B-1, first, the mixed gas is introduced from the gas inlet 50 via the valve 30B. The introduction of the mixed gas is carried out by a pump 20 . The mixed gas that has passed through the pump 20 passes through valves 30C and 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40A to the outside of the system.

In the adsorption step shown in FIG. 6B-2, a gas inlet 40A provided in the first chamber 10A and a gas outlet 50 provided between the first chamber 10A and the second chamber 10B are used. In this example, the valve 30A is open, the valve 30B connects the first chamber 10A to the pump 20, and the valve 30C connects the pump 20 to the gas outlet 50 via the valve 30B. That is, in this step, as shown by the dashed arrow in FIG. 6B-2, first, the mixed gas is introduced directly into the first chamber 10A from the gas inlet 40A via the valve 30A. The introduction of the mixed gas is carried out by a pump 20 . The first chamber 10A contains a solid adsorbent that adsorbs at least a portion of a specific gas component from the mixed gas. Most of the gas that is not adsorbed passes through valve 30B, pump 20, valve 30C, and valve 30B, and is discharged from gas outlet 50 to the outside of the system.

In the removal process from the first chamber shown in FIG. 6C, valve 30A is closed, valve 30B connects the first chamber 10A to the pump 20, and valve 30C connects the pump 20 to the gas outlet 50 via valve 30B. In this step, as indicated by the dashed arrow in FIG. 6C, at least a portion of the gas remaining in the first chamber 10A is exhausted to the outside of the system via the gas outlet 50 by the pump 20. Here, the gas outlet 50 is the same as the gas inlet 50 used in the adsorption process illustrated in FIG. 6B-1. That is, when the adsorption process illustrated in FIG. 6B-1 is adopted, the gas inlet 50 is also used as a gas outlet 50 for removing gases other than the specific gas components remaining in the first chamber 10A.

In the desorption step shown in FIG. 6D, the valve 30A is closed, the valve 30B connects the first chamber 10A to the pump 20, the valve 30C connects the pump 20 to the valve 30D, and the valve 30D is open. In this step, as shown by the dashed arrow in FIG. 6D, at least a portion of the specific gas component desorbed from the solid adsorbent in the first chamber 10A is transferred by the pump 20 to the second chamber 10B.

In the removal step from the second chamber shown in FIG. 6E, valves 30A and 30B are closed, and valve 30C connects second chamber 10B to exhaust port 40B via open valve 30D. In this step, as indicated by the dashed arrow in FIG. 6E, at least a portion of the gas in the second chamber 10B is exhausted to the outside of the system via the exhaust port 40B. This step is performed to collect or remove the gas in the second chamber 10B. For example, this step may be performed to recover a specific gas component that was transferred to the second chamber 10B. Alternatively, this step may be performed before each of the steps described above in order to evacuate the second chamber 10B.

In the configuration shown in FIGs. 6A to 6E, the gas in the second chamber can be removed at any time. With such a configuration, it is easy to recover the gas from the second chamber. The gas may be collected from the second chamber using a pump other than the pump 20 . Also, as explained above, in the configurations shown in the other figures, withdrawal of gas from the second chamber may occur through a separate exhaust port, not shown.

FIG. 7A is a schematic diagram illustrating an example of a device according to another embodiment of the present invention. FIG. 7B is a flow diagram showing an example of a process for removing gas from the second chamber in the device shown in FIG. 7A. FIG. 7C-1 is a flow diagram showing an example of an adsorption process using the device shown in FIG. 7A. FIG. 7C-2 is a flow diagram showing another example of the adsorption process using the device shown in FIG. 7A. FIG. 7D is a flow diagram showing an example of a process for removing gases other than the specific gas component remaining in the first chamber in the device shown in FIG. 7A. FIG. 7E is a flow diagram showing an example of a desorption process using the device shown in FIG. 7A.

The gas recovery device 100 shown in FIG. 7A includes a first chamber 10A, a second chamber 10B, a pump 20, valves 30A/30B/30C/30D/30E, an exhaust port (gas inlet) 40, and a gas inlet (gas outlet) 50.

In the device 100, a first chamber 10A, a pump 20, and a second chamber 10B are connected in this order by piping. The first chamber 10A is connected to an exhaust port (gas inlet) 40 via a two-way valve 30A. A three-way valve 30B is provided between the first chamber 10A and the pump 20, and branches to a junction with a piping between the pump 20 and the second chamber 10B. A three-way valve 30C is provided between the pump 20 and the second chamber 10B, and branches to a junction with the piping between the first chamber 10A and the pump 20. The former junction is located between the pump 20 and the three-way valve 30C, and the latter junction is located between the three-way valve 30B and the pump 20. A two-way valve 30D is provided between the three-way valve 30C and the second chamber 10B. Between the three-way valve 30C and the two-way valve 30D, the piping branches off, and the branched piping is provided with a two-way valve 30E. The two-way valve 30E is connected to a gas inlet (gas outlet) 50.

In the removal step from the second chamber shown in FIG. 7B, valve 30D is open and valve 30E is closed. The valve 30C connects the second chamber 10B with the pump 20. The valve 30B connects the pump 20 to the first chamber 10A. Valve 30A is open. In this step, as indicated by the dashed arrow in FIG. 7B, at least a portion of the gas in the second chamber 10B is exhausted to the outside of the system via the exhaust port 40. This step is typically performed before each of the steps described below in order to evacuate the second chamber 10B. As can be seen from FIG. 7B, this process is carried out by the power of pump 20.

In the adsorption step shown in FIG. 7C-1, the gas inlet 50 provided between the first chamber 10A and the second chamber 10B and the exhaust port 40 provided in the first chamber 10A are used. In this example, valve 30D is closed and valve 30E is open. Valve 30C connects gas inlet 50 and pump 20 via valve 30E. The valve 30B connects the pump 20 to the first chamber 10A. Valve 30A is open. That is, in this step, as shown by the dashed arrow in FIG. 7C-1, first, the mixed gas is introduced from the gas inlet 50 via the valves 30E and 30C. The introduction of the mixed gas is carried out by a pump 20. The mixed gas that has passed through the pump 20 passes through the valve 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 7B to the process shown in FIG. 7C-1 can be realized simply by controlling the opening and closing of the valves 30D and 30E.

In the adsorption step shown in FIG. 7C-2, the gas inlet 40 provided in the first chamber 10A and the gas outlet 50 provided between the first chamber 10A and the second chamber 10B are used. In this example, valve 30A is open, valve 30B connects first chamber 10A to pump 20, and valve 30C connects pump 20 to gas outlet 50 via valve 30E. That is, in this step, as shown by the dashed arrow in FIG. 7C-2, first, the mixed gas is introduced directly into the first chamber 10A from the gas inlet 40 via the valve 30A. The introduction of the mixed gas is carried out by a pump 20. The first chamber 10A contains a solid adsorbent that adsorbs at least a portion of a specific gas component from the mixed gas. Most of the gas that is not adsorbed passes through valve 30B, pump 20, valve 30C, and valve 30E and is discharged from gas outlet 50 to the outside of the system.

In the removal process from the first chamber shown in FIG. 7D, valve 30A is closed, valve 30B connects first chamber 10A to pump 20, valve 30C connects pump 20 to gas outlet 50 via valve 30E, and valve 30D is closed. In this step, as indicated by the dashed arrow in FIG. 7D, at least a portion of the gas remaining in the first chamber 10A is exhausted to the outside of the system via the gas outlet 50 by the pump 20. Here, the gas outlet 50 is the same as the gas inlet 50 used in the adsorption process illustrated in FIG. 7C-1. That is, when the adsorption process illustrated in FIG. 7C-1 is adopted, the gas inlet 50 is also used as a gas outlet 50 for removing gases other than the specific gas components remaining in the first chamber 10A.

In the desorption process shown in FIG. 7E, valve 30A is closed, valve 30B connects first chamber 10A to pump 20, valve 30C connects pump 20 to valve 30D, valve 30D is open, and valve 30E is closed. In this step, as shown by the dashed arrow in FIG. 7E, at least a portion of the specific gas component desorbed from the solid adsorbent in the first chamber 10A is transferred by the pump 20 to the second chamber 10B.

In the configuration shown in FIGs. 7A-7E, removal of gas in the second chamber can be accomplished using the same pump as is used for the other steps. By adopting such a configuration, the device can be made simpler.

FIG. 8A is a schematic diagram illustrating an example of a device according to another embodiment of the present invention. FIG. 8B is a flow diagram showing an example of a process for removing gas from the second chamber in the device shown in FIG. 8A. FIG. 8C is a flow diagram showing an example of an adsorption process using the device shown in FIG. 8A. FIG. 8D is a flow diagram showing an example of a process for removing gases other than the specific gas component remaining in the first chamber in the device shown in FIG. 8A. FIG. 8E is a flow diagram showing an example of a desorption process using the device shown in FIG. 8A.

The gas recovery device 100 shown in FIG. 8A includes a first chamber 10A, a second chamber 10B, a pump 20, valves 30A/30B/30C/30D/30E, an exhaust port 40, and a gas inlet (gas outlet) 50.

In the device 100, a first chamber 10A, a pump 20, and a second chamber 10B are connected in this order by piping. The first chamber 10A is connected to an exhaust port 40 via a two-way valve 30A. A three-way valve 30B is provided between the first chamber 10A and the pump 20, and branches to a junction with a piping between the pump 20 and the second chamber 10B. A three-way valve 30C is provided between the pump 20 and the second chamber 10B, and branches to a junction with the piping between the first chamber 10A and the pump 20. The former junction is located between the three-way valve 30C and the second chamber 10B, and the latter junction is located between the first chamber 10A and the three-way valve 30B. A two-way valve 30D is provided between the former junction and the second chamber 10B. Between the former junction and the two-way valve 30D, the pipe branches off, and the branched pipe is provided with a two-way valve 30E. The two-way valve 30E is connected to a gas inlet (gas outlet) 50.

In the removal step from the second chamber shown in FIG. 8B, valve 30D is open and valve 30E is closed. The valve 30B connects the second chamber 10B with the pump 20. The valve 30C connects the pump 20 to the first chamber 10A. Valve 30A is open. In this step, as indicated by the dashed arrow in FIG. 8B, at least a portion of the gas in the second chamber 10B is exhausted to the outside of the system via the exhaust port 40. This step is typically performed before each of the steps described below in order to evacuate the second chamber 10B. As can be seen from FIG. 8B, this process is carried out by the power of pump 20.

In the adsorption step shown in FIG. 8C, valve 30D is closed and valve 30E is open. Valve 30B connects gas inlet 50 and pump 20 via valve 30E. The valve 30C connects the pump 20 to the first chamber 10A. Valve 30A is open. In this step, as indicated by the dashed arrow in FIG. 8C, first, a mixed gas is introduced from the gas inlet 50 via the valves 30E and 30B. The introduction of the mixed gas is carried out by a pump 20. The mixed gas that has passed through the pump 20 passes through the valve 30C and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 8B to the process shown in FIG. 8C can be realized simply by controlling the opening and closing of the valves 30D and 30E. In addition, instead of the adsorption process shown in FIG. 8C, the exhaust port 40 provided in the first chamber 10A can also be used as the gas inlet 40, as previously described with reference to FIGs. 4B-2, 5B-2, 6B-2, and 7C-2.

In the removal process from the first chamber shown in FIG. 8D, valve 30A is closed, valve 30B connects first chamber 10A to pump 20, valve 30C connects pump 20 to gas outlet 50 via valve 30E, and valve 30D is closed. In this step, as indicated by the dashed arrow in FIG. 8D, at least a portion of the gas remaining in the first chamber 10A is discharged by the pump 20 to the outside of the system via the gas outlet 50. Here, the gas outlet 50 is the same as the gas inlet 50. That is, the gas inlet 50 is also used as a gas outlet 50 for removing gases other than the specific gas components remaining in the first chamber 10A.

In the desorption process shown in FIG. 8E, valve 30A is closed, valve 30B connects first chamber 10A to pump 20, valve 30C connects pump 20 to valve 30D, valve 30D is open, and valve 30E is closed. In this step, as shown by the dashed arrow in FIG. 8E, at least a portion of the specific gas component desorbed from the solid adsorbent in the first chamber 10A is transferred by the pump 20 to the second chamber 10B.

The configuration shown in FIGs. 8A to 8E is similar to the configuration shown in FIGs. 7A to 7E, except that the piping junction points are different. Even when such a configuration is adopted, it is possible to achieve the same effects as when the configurations shown in FIGs. 7A to 7E are adopted.

FIG. 9A is a schematic diagram illustrating an example of a device according to another embodiment of the present invention. FIG. 9B is a flow diagram showing an example of a process for removing gas from the second chamber in the device shown in FIG. 9A. FIG. 9C is a flow diagram showing an example of an adsorption process using the device shown in FIG. 9A. FIG. 9D is a flow diagram showing an example of a process for removing gases other than the specific gas component remaining in the first chamber in the device shown in FIG. 9A. FIG. 9E is a flow diagram showing an example of a desorption process using the device shown in FIG. 9A.

The gas recovery device 100 shown in FIG. 9A includes a first chamber 10A, a second chamber 10B, a pump 20, valves 30A/30B/30C/30D, an exhaust port 40, and a gas inlet (gas outlet) 50.

In the device 100, a first chamber 10A, a pump 20, and a second chamber 10B are connected in this order by piping. The first chamber 10A is connected to an exhaust port 40 via a two-way valve 30A. A three-way valve 30B is provided between the first chamber 10A and the pump 20, and branches to a junction with a piping between the pump 20 and the second chamber 10B. A three-way valve 30C is provided between the pump 20 and the second chamber 10B, and branches to a junction with the piping between the first chamber 10A and the pump 20. The former junction is located between the pump 20 and the three-way valve 30C, and the latter junction is located between the three-way valve 30B and the pump 20. A three-way valve 30D is provided between the three-way valve 30C and the second chamber 10B, and branches off to a gas inlet (gas outlet) 50.

In the removal process from the second chamber shown in FIG. 9B, the valve 30C connects the second chamber 10B to the pump 20 via the valve 30D. The valve 30B connects the pump 20 to the first chamber 10A. Valve 30A is open. In this step, as indicated by the dashed arrow in FIG. 9B, at least a portion of the gas in the second chamber 10B is exhausted to the outside of the system via the exhaust port 40. This step is typically performed before each of the steps described below in order to evacuate the second chamber 10B. As can be seen from FIG. 9B, this process is carried out by the power of pump 20.

In the adsorption step shown in FIG. 9C, the valve 30C connects the gas inlet 50 and the pump 20 via the valve 30D. The valve 30B connects the pump 20 to the first chamber 10A. Valve 30A is open. In this step, as indicated by the dashed arrow in FIG. 9C, first, a mixed gas is introduced from the gas inlet 50 via the valves 30D and 30C. The introduction of the mixed gas is carried out by a pump 20 . The mixed gas that has passed through the pump 20 passes through the valve 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 9B to the process shown in FIG. 9C can be realized simply by controlling the operation of the valve 30D. In addition, instead of the adsorption process shown in FIG. 9C, the exhaust port 40 provided in the first chamber 10A can also be used as the gas inlet 40, as previously described with reference to FIGs. 4B-2, 5B-2, 6B-2, and 7C-2.

In the removal process from the first chamber shown in FIG. 9D, valve 30A is closed, valve 30B connects first chamber 10A to pump 20, and valve 30C connects pump 20 to gas outlet 50 via valve 30D. In this step, as indicated by the dashed arrow in FIG. 9D, at least a portion of the gas remaining in the first chamber 10A is exhausted by the pump 20 to the outside of the system via the gas outlet 50. Here, the gas outlet 50 is the same as the gas inlet 50. That is, the gas inlet 50 is also used as a gas outlet 50 for removing gases other than the specific gas components remaining in the first chamber 10A.

In the desorption step shown in FIG. 9E, the valve 30A is closed, the valve 30B connects the first chamber 10A to the pump 20, and the valve 30C connects the pump 20 to the second chamber 10B via the valve 30D. In this step, as shown by the dashed arrow in FIG. 9E, at least a portion of the specific gas component desorbed from the solid adsorbent in the first chamber 10A is transferred by the pump 20 to the second chamber 10B.

The configuration shown in FIGs. 9A-9E requires fewer valves than, for example, the configurations shown in FIGs. 7A-7E and 8A-8E. By adopting such a configuration, the device can be further simplified.

FIG. 10A is a schematic diagram illustrating an example of a device according to another embodiment of the present invention. FIG. 10B is a flow diagram showing an example of a process for removing gas from the second chamber in the device shown in FIG. 10A. FIG. 10C is a flow diagram showing an example of an adsorption process using the device shown in FIG. 10A. FIG. 10D is a flow diagram showing an example of a process for removing gases other than the specific gas component remaining in the first chamber in the device shown in FIG. 10A. FIG. 10E is a flow diagram showing an example of a desorption process using the device shown in FIG. 10A.

The gas recovery device 100 shown in FIG. 10A includes a first chamber 10A, a second chamber 10B, a pump 20, valves 30A/30B/30C/30D, an exhaust port 40, and a gas inlet (gas outlet) 50.

In the device 100, a first chamber 10A, a pump 20, and a second chamber 10B are connected in this order by piping. The first chamber 10A is connected to an exhaust port 40 via a two-way valve 30A. A four-way valve 30B is provided between the first chamber 10A and the pump 20, and a four-way valve 30C is provided between the pump 20 and the second chamber 10B. The four-way valve 30B and the four-way valve 30C are connected to each other by two pipes. A three-way valve 30D is provided between the four-way valve 30C and the second chamber 10B, and branches off to a gas inlet (gas outlet) 50.

In the removal process from the second chamber shown in FIG. 10B, valves 30C and 30B connect the second chamber 10B to the pump 20 via valve 30D. Additionally, valves 30C and 30B connect the pump 20 to the first chamber 10A. Valve 30A is open. In this step, as indicated by the dashed arrow in FIG. 10B, at least a portion of the gas in the second chamber 10B is exhausted to the outside of the system via the exhaust port 40. This step is typically performed before each of the steps described below in order to evacuate the second chamber 10B. As can be seen from FIG. 10B, this process is carried out by the power of pump 20.

In the adsorption step shown in FIG. 10C, the valves 30C and 30B connect the gas inlet 50 and the pump 20 via the valve 30D. Additionally, valves 30C and 30B connect the pump 20 to the first chamber 10A. Valve 30A is open. In this step, as indicated by the dashed arrows in FIG. 10C, first, a mixed gas is introduced from the gas inlet 50 through the valves 30D, 30C, and 30B. The introduction of the mixed gas is carried out by a pump 20 . The mixed gas that has passed through the pump 20 passes through valves 30C and 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 10B to the process shown in FIG. 10C can be realized simply by controlling the operation of the valve 30D. In addition, instead of the adsorption process shown in FIG. 10C, the exhaust port 40 provided in the first chamber 10A can also be used as the gas inlet 40, as previously described with reference to FIGs. 4B-2, 5B-2, 6B-2, and 7C-2.

In the removal process from the first chamber shown in FIG. 10D, valve 30A is closed, valve 30B connects first chamber 10A to pump 20, and valve 30C connects pump 20 to gas outlet 50 via valve 30D. In this step, as indicated by the dashed arrow in FIG. 10D, at least a portion of the gas remaining in the first chamber 10A is discharged by the pump 20 to the outside of the system via the gas outlet 50. Here, the gas outlet 50 is the same as the gas inlet 50. That is, the gas inlet 50 is also used as a gas outlet 50 for removing gases other than the specific gas components remaining in the first chamber 10A.

In the desorption step shown in FIG. 10E, the valve 30A is closed, the valve 30B connects the first chamber 10A to the pump 20, and the valve 30C connects the pump 20 to the second chamber 10B via the valve 30D. In this step, as shown by the dashed arrow in FIG. 10E, at least a portion of the specific gas component desorbed from the solid adsorbent in the first chamber 10A is transferred by the pump 20 to the second chamber 10B.

In the configuration shown in FIGs. 10A to 10E, the length of the piping through which gas can pass in the above-described desorption step can be made shorter than in the configuration shown in FIGs. 9A to 9E, for example. By adopting such a configuration, the amount of gas remaining in the piping can be reduced, thereby shortening the time required to transfer the gas. For the same reason, it is also possible to increase the purity of the specific gas component being recovered.

FIG. 11A is a schematic diagram illustrating an example of a device according to another embodiment of the present invention. FIG. 11B is a flow diagram showing an example of a process for removing gas from the second chamber in the device shown in FIG. 11A. FIG. 11C is a flow diagram showing an example of an adsorption step using the primary first chamber in the device shown in FIG. 11A. FIG. 11D is a flow diagram showing an example of a process for removing gases other than the specific gas component remaining in the primary first chamber in the device shown in FIG. 11A. FIG. 11E is a flow diagram showing an example of a desorption process using the primary first chamber in the device shown in FIG. 11A. FIG. 11F is a flow diagram showing an example of an adsorption step using the secondary first chamber in the device shown in FIG. 11A. FIG. 11G is a flow diagram showing an example of a process for removing gases other than the specific gas component remaining in the secondary first chamber in the device shown in FIG. 11A. FIG. 11H is a flow diagram showing an example of a desorption step using the secondary first chamber in the device shown in FIG. 11A.

The gas recovery device 100 shown in FIG. 11A includes a first chamber 10A/10A', a second chamber 10B, a pump 20, valves 30A/30A'/30B/30C/30D/30E, an exhaust port 40/40', and a gas inlet (gas outlet) 50. The device 100 shown in FIG. 11A has a similar configuration to the device shown in FIG. 10A, except that the device 100 has a plurality of first chambers which are switchable.

In the device 100, a primary first chamber 10A, a pump 20, and a second chamber 10B are connected in this order by piping. The primary first chamber 10A is connected to an exhaust port 40 via a two-way valve 30A. A four-way valve 30B is provided between the first chamber 10A and the pump 20, and a four-way valve 30C is provided between the pump 20 and the second chamber 10B. The four-way valve 30B and the four-way valve 30C are connected to each other by two pipes. A three-way valve 30D is provided between the four-way valve 30C and the second chamber 10B, and branches off to a gas inlet (gas outlet) 50. A three-way valve 30D is provided between the four-way valve 30C and the second chamber 10B, and branches off to a gas inlet (gas outlet) 50. The secondary first chamber 10A' is connected to an exhaust port 40' via a two-way valve 30A'.

In the removal process from the second chamber shown in FIG. 11B, valves 30C and 30B connect the second chamber 10B to the pump 20 via valve 30D. Valves 30C, 30B, and 30E connect the pump 20 to the first chamber 10A. Valve 30A is open. In this step, as indicated by the dashed arrow in FIG. 11B, at least a portion of the gas in the second chamber 10B is exhausted to the outside of the system via the exhaust port 40. This step is typically performed before each of the steps described below in order to evacuate the second chamber 10B. As can be seen from FIG. 11B, this process is carried out by the power of pump 20.

In the adsorption step shown in FIG. 11C, the valves 30C and 30B connect the gas inlet 50 and the pump 20 via the valve 30D. Valves 30C, 30B, and 30E connect the pump 20 to the first chamber 10A. Valve 30A is open. In this step, as indicated by the dashed arrows in FIG. 11C, first, a mixed gas is introduced from the gas inlet 50 through the valves 30D, 30C, and 30B. The introduction of the mixed gas is carried out by a pump 20. The mixed gas that has passed through the pump 20 passes through valves 30C, 30B, and 30E and is transferred to the primary first chamber 10A. The primary first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 11B to the process shown in FIG. 11C can be realized simply by controlling the operation of the valve 30D. In addition, instead of the adsorption process shown in FIG. 11C, the exhaust port 40 provided in the primary first chamber 10A can also be used as the gas inlet 40, as previously described with reference to FIGs. 4B-2, 5B-2, 6B-2, and 7C-2.

In the removal process from the primary first chamber shown in FIG. 11D, valve 30A is closed, valves 30E and 30B connect the primary first chamber 10A to the pump 20, and valve 30C connects the pump 20 to the gas outlet 50 via valve 30D. In this step, as indicated by the dashed arrow in FIG. 11D, at least a portion of the gas remaining in the primary first chamber 10A is discharged to the outside of the system via the gas outlet 50 by the pump 20. Here, the gas outlet 50 is the same as the gas inlet 50. That is, the gas inlet 50 is also used as a gas outlet 50 for removing gases other than the specific gas components remaining in the first chamber 10A.

In the desorption process shown in FIG. 11E, valve 30A is closed, valves 30E and 30B connect the primary first chamber 10A to the pump 20, and valve 30C connects the pump 20 to the second chamber 10B via valve 30D. In this step, as shown by the dashed arrow in FIG. 11E, at least a portion of the specific gas component desorbed from the solid adsorbent in the primary first chamber 10A is transferred by the pump 20 to the second chamber 10B.

Here, if necessary, the connection from the primary first chamber 10Ato the secondary first chamber 10A' is switched using the three-way valve 30E. In this case, while the secondary first chamber 10A' is being used, the primary first chamber 10A that has been heated in the desorption step shown in FIG. 11E can be allowed to cool or be cooled. Note that the removal step from the second chamber shown in FIG. 11B may be repeated before or after this switching.

In the adsorption step shown in FIG. 11F, the valves 30C and 30B connect the gas inlet 50 and the pump 20 via the valve 30D. Additionally, valves 30C, 30B and 30E connect the pump 20 to the secondary first chamber 10A'. Valve 30A' is open. In this step, as indicated by the dashed arrows in FIG. 11F, first, a mixed gas is introduced from the gas inlet 50 through the valves 30D, 30C, and 30B. The introduction of the mixed gas is carried out by a pump 20 . The mixed gas that has passed through pump 20 passes through valves 30C, 30B, and 30E and is transferred to a secondary first chamber 10A'. The secondary first chamber 10A' contains a solid adsorbent that adsorbs at least a portion of a specific gas component from the gas mixture. Most of the gas that is not adsorbed passes through valve 30A' and is exhausted from exhaust port 40' to the outside of the system. In addition, instead of the adsorption process shown in FIG. 11F, as previously described with reference to FIGs. 4B-2, 5B-2, 6B-2, and 7C-2, the exhaust port 40' provided in the secondary first chamber 10A' can also be used as the gas inlet 40'.

In the removal process from the secondary first chamber shown in FIG. 11G, valve 30A' is closed, valves 30E and 30B connect the secondary first chamber 10A' to the pump 20, and valve 30C connects the pump 20 to the gas outlet 50 via valve 30D. In this step, as shown by the dashed arrow in FIG. 11G, at least a portion of the gas remaining in the secondary first chamber 10A' is discharged to the outside of the system through the gas outlet 50 by the pump 20. Here, the gas outlet 50 is the same as the gas inlet 50. That is, the gas inlet 50 is also used as a gas outlet 50 for removing gases other than the specific gas components remaining in the secondary first chamber 10A'.

In the desorption process shown in FIG. 11H, valve 30A' is closed, valves 30E and 30B connect the secondary first chamber 10A' to the pump 20, and valve 30C connects the pump 20 to the second chamber 10B via valve 30D. In this step, as shown by the dashed arrow in FIG. 11H, at least a portion of the specific gas component desorbed from the solid adsorbent in the secondary first chamber 10A' is transferred by pump 20 to the second chamber 10B. At the end of the desorption process, the second chamber 10B has a temperature of, for example, room temperature to 100° C. and a pressure of, for example, 2 to 20 atm.

In the configurations shown in FIGs. 11A to 11H, as described above, a plurality of first chambers can be used in a switchable manner. By employing such a configuration, the first chamber can be left to cool or cooled efficiently, so that the amount of gas recovered per unit time can be further improved.

FIG. 12A is a schematic diagram illustrating an example of a device according to another embodiment of the present invention. FIG. 12B is a flow diagram showing an example of a process for removing gas from the second chamber in the device shown in FIG. 12A. FIG. 12C is a flow diagram showing an example of an adsorption process using the device shown in FIG. 12A. FIG. 12D is a flow diagram showing an example of a process for removing gases other than the specific gas component remaining in the first chamber in the device shown in FIG. 12A. FIG. 12E is a flow diagram showing an example of a desorption process using the device shown in FIG. 12A.

The gas recovery device 100 shown in FIG. 12A includes a first chamber 10A, a second chamber 10B, a pump 20, valves 30A/30B/30C, an exhaust port 40, a gas inlet (gas outlet) 50, and a sealing plug 70.

In the device 100, a first chamber 10A, a pump 20, and a second chamber 10B are connected in this order by piping. The first chamber 10A is connected to an exhaust port 40 via a two-way valve 30A. A four-way valve 30B is provided between the first chamber 10A and the pump 20, and a four-way valve 30C is provided between the pump 20 and the second chamber 10B via the four-way valve 30B. The four-way valve 30C branches to a gas inlet (gas outlet) 50 and a sealing plug 70. The sealing plug 70 is typically closed to the outside world of the device 100 at all times. The sealing plug 70 can be removed as needed, for example, when performing maintenance on the device 100 .

In the removal process from the second chamber shown in FIG. 12B, valves 30C and 30B connect the second chamber 10B to the pump 20. Furthermore, the valve 30B connects the pump 20 to the first chamber 10A. Valve 30A is open. In this step, as indicated by the dashed arrow in FIG. 12B, at least a portion of the gas in the second chamber 10B is exhausted to the outside of the system via the exhaust port 40. This step is typically performed before each of the steps described below in order to evacuate the second chamber 10B. As can be seen from FIG. 12B, this process is carried out by the power of pump 20.

In the adsorption process shown in FIG. 12C, valves 30C and 30B connect gas inlet 50 to pump 20. Furthermore, the valve 30B connects the pump 20 to the first chamber 10A. Valve 30A is open. In this step, as indicated by the dashed arrow in FIG. 12C, first, a mixed gas is introduced from the gas inlet 50 via the valves 30C and 30B. The introduction of the mixed gas is carried out by a pump 20 . The mixed gas that has passed through the pump 20 passes through the valve 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 12B to the process shown in FIG. 12C can be realized simply by controlling the operation of the valve 30C. In addition, instead of the adsorption process shown in FIG. 12C, the exhaust port 40 provided in the first chamber 10A can also be used as the gas inlet 40, as previously described with reference to FIGs. 4B-2, 5B-2, 6B-2, and 7C-2.

In the removal process from the first chamber shown in FIG. 12D, valve 30A is closed, valve 30B connects the first chamber 10A to the pump 20, and valve 30C connects the pump 20 to the gas outlet 50 via valve 30B. In this step, as indicated by the dashed arrow in FIG. 12D, at least a portion of the gas remaining in the first chamber 10A is exhausted to the outside of the system via the gas outlet 50 by the pump 20. Here, the gas outlet 50 is the same as the gas inlet 50. That is, the gas inlet 50 is also used as a gas outlet 50 for removing gases other than the specific gas components remaining in the first chamber 10A.

In the desorption step shown in FIG. 12E, the valve 30A is closed, the valve 30B connects the first chamber 10A to the pump 20, and the valve 30C connects the pump 20 to the second chamber 10B via the valve 30B. In this step, as shown by the dashed arrow in FIG. 12E, at least a portion of the specific gas component desorbed from the solid adsorbent in the first chamber 10A is transferred by the pump 20 to the second chamber 10B.

The configuration shown in FIGs. 12A-12E requires fewer valves than, for example, the configuration shown in FIGs. 10A-10E. By adopting such a configuration, the device can be made simpler.

FIG. 13A is a schematic diagram illustrating an example of a device according to another embodiment of the present invention. FIG. 13B is a flow diagram showing an example of a process for removing gas from the second chamber in the device shown in FIG. 13A. FIG. 13C is a flow diagram showing an example of an adsorption process using the device shown in FIG. 13A. FIG. 13D is a flow diagram showing an example of a process for removing gases other than the specific gas component remaining in the first chamber in the device shown in FIG. 13A. FIG. 13E is a flow diagram showing an example of a desorption process using the device shown in FIG. 13A.

The gas recovery device 100 shown in FIG. 13A includes a first chamber 10A, a second chamber 10B, a pump 20, valves 30A/30B/30C, an exhaust port 40, and a gas inlet (gas outlet) 50. The device 100 is similar to the device shown in FIG. 12A, except that the four-way valve 30C and sealing plug 70 are replaced with a three-way valve 30C.

In the device 100, a first chamber 10A, a pump 20, and a second chamber 10B are connected in this order by piping. The first chamber 10A is connected to an exhaust port 40 via a two-way valve 30A. A four-way valve 30B is provided between the first chamber 10A and the pump 20, and a three-way valve 30C is provided between the pump 20 and the second chamber 10B via the four-way valve 30B. The three-way valve 30C further branches into a gas inlet (gas outlet) 50.

In the removal process from the second chamber shown in FIG. 13B, valves 30C and 30B connect the second chamber 10B to the pump 20. Furthermore, the valve 30B connects the pump 20 to the first chamber 10A. Valve 30A is open. In this step, as indicated by the dashed arrow in FIG. 13B, at least a portion of the gas in the second chamber 10B is exhausted to the outside of the system via the exhaust port 40. This step is typically performed before each of the steps described below in order to evacuate the second chamber 10B. As can be seen from FIG. 13B, this process is carried out by the power of pump 20.

In the adsorption process shown in FIG. 13C, valves 30C and 30B connect gas inlet 50 to pump 20. Furthermore, the valve 30B connects the pump 20 to the first chamber 10A. Valve 30A is open. In this step, as indicated by the dashed arrow in FIG. 13C, first, a mixed gas is introduced from the gas inlet 50 via the valves 30C and 30B. The introduction of the mixed gas is carried out by a pump 20 . The mixed gas that has passed through the pump 20 passes through the valve 30B and enters the first chamber 10A. The first chamber 10A contains a solid adsorbent that adsorbs at least a portion of a specific gas component from the mixed gas. Most of the gas that is not adsorbed passes through valve 30A and is exhausted from exhaust port 40 to the outside of the system. The transition from the process shown in FIG. 13B to the process shown in FIG. 13C can be realized simply by controlling the operation of the valve 30C. In addition, instead of the adsorption process shown in FIG. 13C, the exhaust port 40 provided in the first chamber 10A can also be used as the gas inlet 40, as previously described with reference to FIGs. 4B-2, 5B-2, 6B-2, and 7C-2.

In the removal process from the first chamber shown in FIG. 13D, valve 30A is closed, valve 30B connects the first chamber 10A to the pump 20, and valve 30C connects the pump 20 to the gas outlet 50 via valve 30B. In this step, as indicated by the dashed arrow in FIG. 13D, at least a portion of the gas remaining in the first chamber 10A is exhausted to the outside of the system via the gas outlet 50 by the pump 20. Here, the gas outlet 50 is the same as the gas inlet 50. That is, the gas inlet 50 is also used as a gas outlet 50 for removing gases other than the specific gas components remaining in the first chamber 10A.

In the desorption process shown in FIG. 13E, the valve 30A is closed, the valve 30B connects the first chamber 10A to the pump 20, and the valve 30C connects the pump 20 to the second chamber 10B via the valve 30B. In this step, as shown by the dashed arrow in FIG. 13E, at least a portion of the specific gas component desorbed from the solid adsorbent in the first chamber 10A is transferred by the pump 20 to the second chamber 10B.

The configuration shown in FIGs. 13A-13E requires fewer valves than, for example, the configuration shown in FIGs. 10A-10E. By adopting such a configuration, the device can be made simpler.

FIG. 14A is a schematic diagram illustrating an example of a device according to another embodiment of the present invention. FIG. 14B is a flow diagram showing an example of an adsorption process using the device shown in FIG. 14A. FIG. 14C is a flow diagram showing an example of a process for removing gases other than the specific gas component remaining in the first chamber in the device shown in FIG. 14A. FIG. 14D is a flow diagram showing an example of a desorption process using the device shown in FIG. 14A.

The gas recovery device 100 shown in FIG. 14A includes a first chamber 10A, a second chamber 10B, a pump 20, valves 30A/30B, a gas inlet 40, and a gas outlet 50.

In the device 100, a first chamber 10A, a pump 20, and a second chamber 10B are connected in this order by piping. The first chamber 10A is connected to a gas inlet 40 via a two-way valve 30A. A three-way valve 30B is provided between the pump 20 and the second chamber 10B. The three-way valve 30B further branches into a gas outlet 50 .

In the adsorption step shown in FIG. 14B, the valve 30A is opened, and the valve 30B connects the pump 20 to the gas outlet 50. In this step, as indicated by the dashed arrow in FIG. 14B, first, the mixed gas is introduced directly into the first chamber 10A from the gas inlet 40 via the valve 30A. The introduction of the mixed gas is carried out by a pump 20 . The first chamber 10A contains a solid adsorbent that adsorbs at least a portion of a specific gas component from the mixed gas. Most of the gas that is not adsorbed is discharged to the outside of the system from the gas outlet 50 via the pump 20 and the valve 30B.

In the first chamber removal step shown in FIG. 14C, valve 30A is closed and valve 30B connects pump 20 to vent port 50. In this step, as indicated by the dashed arrow in FIG. 14C, at least a portion of the gas remaining in the first chamber 10A is exhausted to the outside of the system via the gas outlet 50 by the pump 20.

In the desorption step shown in FIG. 14D, valve 30A is closed and valve 30B connects pump 20 to second chamber 10B. In this step, as shown by the dashed arrow in FIG. 14D, at least a portion of the specific gas component desorbed from the solid adsorbent in the first chamber 10A is transferred by the pump 20 to the second chamber 10B.

The configuration shown in FIGs. 14A-14D requires fewer valves than, for example, the configuration shown in FIGs. 4A-4D. By adopting such a configuration, the device can be made simpler. In the configuration shown in FIGs. 14A to 14D, a gas inlet 40 is provided in the first chamber 10A. In this case, as described above, by reducing the load on the pump 20, it is also possible to reduce the time and/or frequency required for maintenance of the pump 20.

FIG. 15A is a schematic diagram illustrating an example of a device according to another embodiment of the present invention. FIG. 15B is a flow diagram showing an example of a process for removing gas from the second chamber in the device shown in FIG. 15A. FIG. 15C is a flow diagram showing an example of an adsorption process using the device shown in FIG. 15A. FIG. 15D is a flow diagram showing an example of a process for removing gases other than the specific gas component remaining in the first chamber in the device shown in FIG. 15A. FIG. 15E is a flow diagram showing an example of a desorption process using the device shown in FIG. 15A.

The gas recovery device 100 shown in FIG. 15A includes a first chamber 10A, a second chamber 10B, a pump 20, valves 30A/30B/30C, a gas inlet (exhaust port) 40, and a gas outlet 50.

In the device 100, a first chamber 10A, a pump 20, and a second chamber 10B are connected in this order by piping. The first chamber 10A is connected to a gas inlet (exhaust port) 40 via a two-way valve 30A. A four-way valve 30B is provided between the first chamber 10A and the pump 20, and a three-way valve 30C is provided between the pump 20 and the second chamber 10B, which, together with the four-way valve 30B, connects the pump 20 and the second chamber 10B. The three-way valve 30C further branches into a gas outlet 50.

In the removal process from the second chamber shown in FIG. 15B, the valve 30B connects the second chamber 10B to the pump 20. Additionally, valves 30C and 30B connect the pump 20 to the first chamber 10A. Valve 30A is open. In this step, as indicated by the dashed arrow in FIG. 15B, at least a portion of the gas in the second chamber 10B is exhausted to the outside of the system via the exhaust port 40. This step is typically performed before each of the steps described below in order to evacuate the second chamber 10B. As can be seen from FIG. 15B, this process is carried out by the power of pump 20.

In the adsorption step shown in FIG. 15C, the valve 30A is open, the valve 30B connects the first chamber 10A to the pump 20, and the valve 30C connects the pump 20 to the gas outlet 50. In this step, as indicated by the dashed arrow in FIG. 15C, first, the mixed gas is introduced directly into the first chamber 10A from the gas inlet 40 via the valve 30A. The introduction of the mixed gas is carried out by a pump 20. The first chamber 10A contains a solid adsorbent that adsorbs at least a portion of a specific gas component from the mixed gas. Most of the gas that is not adsorbed passes through valve 30B, pump 20, and valve 30C and is discharged from gas outlet 50 to the outside of the system.

In the removal process from the first chamber shown in FIG. 15D, the valve 30A is closed, the valve 30B connects the first chamber 10A to the pump 20, and the valve 30C connects the pump 20 to the gas outlet 50. In this step, as indicated by the dashed arrow in FIG. 15D, at least a portion of the gas remaining in the first chamber 10A is exhausted to the outside of the system via the gas outlet 50 by the pump 20.

In the desorption step shown in FIG. 15E, the valve 30A is closed, the valve 30B connects the first chamber 10A to the pump 20, and the valves 30C and 30B connect the pump 20 to the second chamber 10B. In this step, as shown by the dashed arrow in FIG. 15E, at least a portion of the specific gas component desorbed from the solid adsorbent in the first chamber 10A is transferred by the pump 20 to the second chamber 10B.

The configuration shown in FIGs. 15A-15E requires fewer valves than, for example, the configuration shown in FIGs. 10A-10E. By adopting such a configuration, the device can be made simpler. In the configuration shown in FIGs. 15A to 15E, a gas inlet 40 is provided in the first chamber 10A. In this case, as described above, by reducing the load on the pump 20, it is also possible to reduce the time and/or frequency required for maintenance of the pump 20.

FIG. 16A is a schematic diagram illustrating an example of a device according to another embodiment of the present invention. FIG. 16B is a flow diagram showing an example of a process for removing gas from the second chamber in the device shown in FIG. 16A. FIG. 16C is a flow diagram showing an example of an adsorption process using the device shown in FIG. 16A. FIG. 16D is a flow diagram showing an example of a process for removing gases other than the specific gas component remaining in the first chamber in the device shown in FIG. 16A. FIG. 16E is a flow diagram showing an example of a desorption process using the device shown in FIG. 16A.

The gas recovery device 100 shown in FIG. 16A includes a first chamber 10A, a second chamber 10B, a pump 20, valves 30A/30B/30C, a gas inlet 40, and a gas outlet 50.

In the device 100, a first chamber 10A, a pump 20, and a second chamber 10B are connected in this order by piping. The first chamber 10A is connected to a gas inlet 40 via a two-way valve 30A. A three-way valve 30B is provided between the first chamber 10A and the pump 20, and branches to a junction with a pipe between the pump 20 and the second chamber 10B. This junction is located between valve 30C and second chamber 10B. A three-way valve 30C is provided between the pump 20 and the second chamber 10B. The three-way valve 30C further branches into a gas outlet 50.

In the removal process from the second chamber shown in FIG. 16B, the valve 30B connects the second chamber 10B to the pump 20. Furthermore, the valve 30C connects the pump 20 and the gas outlet 50 . In this step, as indicated by the dashed arrow in FIG. 16B, at least a portion of the gas in the second chamber 10B is exhausted to the outside of the system via the gas outlet 50. This step is typically performed before each of the steps described below in order to evacuate the second chamber 10B. As can be seen from FIG. 16B, this process is carried out by the power of pump 20.

In the adsorption step shown in FIG. 16C, the valve 30A is open, the valve 30B connects the first chamber 10A to the pump 20, and the valve 30C connects the pump 20 to the gas outlet 50. In this step, as indicated by the dashed arrow in FIG. 16C, first, the mixed gas is introduced directly into the first chamber 10A from the gas inlet 40 via the valve 30A. The introduction of the mixed gas is carried out by a pump 20. The first chamber 10A contains a solid adsorbent that adsorbs at least a portion of a specific gas component from the mixed gas. Most of the gas that is not adsorbed passes through valve 30B, pump 20, and valve 30C and is discharged from gas outlet 50 to the outside of the system.

In the removal process from the first chamber shown in FIG. 16D, valve 30A is closed, valve 30B connects first chamber 10A to pump 20, and valve 30C connects pump 20 to gas outlet 50. In this step, as indicated by the dashed arrow in FIG. 16D, at least a portion of the gas remaining in the first chamber 10A is exhausted to the outside of the system via the gas outlet 50 by the pump 20.

In the desorption step shown in FIG. 16E, the valve 30A is closed, the valve 30B connects the first chamber 10A to the pump 20, and the valve 30C connects the pump 20 to the second chamber 10B. In this step, as shown by the dashed arrow in FIG. 16E, at least a portion of the specific gas component desorbed from the solid adsorbent in the first chamber 10A is transferred by the pump 20 to the second chamber 10B.

The configuration shown in FIGs. 16A-16E requires fewer valves than, for example, the configuration shown in FIGs. 10A-10E. By adopting such a configuration, the device can be made simpler. In the configuration shown in FIGs. 16A to 16E, a gas inlet 40 is provided in the first chamber 10A. In this case, as described above, by reducing the load on the pump 20, it is also possible to reduce the time and/or frequency required for maintenance of the pump 20. In this example, the gas inlet provided in the first chamber 10A can also be used as an exhaust port. In this case, the device 100 can be made simpler than when the first chamber 10A is provided with a separate gas inlet and exhaust port.

FIG. 17A is a schematic diagram illustrating an example of a device according to another embodiment of the present invention. FIG. 17B is a flow diagram showing an example of a process for removing gas from the second chamber in the device shown in FIG. 17A. FIG. 17C is a flow diagram showing an example of an adsorption process using the device shown in FIG. 17A. FIG. 17D is a flow diagram showing an example of a process for removing gases other than the specific gas component remaining in the first chamber in the device shown in FIG. 17A. FIG. 17E is a flow diagram showing an example of a desorption process using the device shown in FIG. 17A.

The gas recovery device 100 shown in FIG. 17A includes a first chamber 10A, a second chamber 10B, a pump 20, valves 30A/30B, a gas inlet 40, and a gas outlet 50.

In the device 100, a first chamber 10A, a pump 20, and a second chamber 10B are connected in this order by piping. The first chamber 10A is connected to a gas inlet 40 via a two-way valve 30A. In addition, in the device 100, five-way valves 30B are provided between the first chamber 10A and the pump 20, between the pump 20 and the second chamber 10B, and between the pump 20 and the gas outlet 50. A three-position exhaust center type valve can typically be used as the five-way valve 30B. In the removal process from the second chamber shown in FIG. 17B, the valve 30B connects the second chamber 10B to the pump 20 and also connects the pump 20 to the gas outlet 50. In this step, as indicated by the dashed arrow in FIG. 17B, at least a portion of the gas in the second chamber 10B is exhausted to the outside of the system via the gas outlet 50. This step is typically performed before each of the steps described below in order to evacuate the second chamber 10B. As can be seen from FIG. 17B, this process is carried out by the power of pump 20.

In the adsorption step shown in FIG. 17C, the valve 30A is open, and the valve 30B connects the first chamber 10A to the pump 20 and also connects the pump 20 to the gas outlet 50. In this step, as indicated by the dashed arrow in FIG. 17C, first, the mixed gas is introduced directly into the first chamber 10A from the gas inlet 40 via the valve 30A. The introduction of the mixed gas is carried out by a pump 20. The first chamber 10A contains a solid adsorbent that adsorbs at least a portion of a specific gas component from the mixed gas. Most of the gas that is not adsorbed passes through valve 30B, pump 20, and valve 30B and is discharged from gas outlet 50 to the outside of the system.

In the removal step from the first chamber shown in FIG. 17D, the valve 30A is closed, and the valve 30B connects the first chamber 10A to the pump 20 and also connects the pump 20 to the gas outlet 50. In this step, as indicated by the dashed arrow in FIG. 17D, at least a portion of the gas remaining in the first chamber 10A is exhausted by the pump 20 to the outside of the system via the gas outlet 50.

In the desorption step shown in FIG. 17E, the valve 30A is closed, and the valve 30B connects the first chamber 10A to the pump 20 and also connects the pump 20 to the second chamber 10B. In this step, as shown by the dashed arrow in FIG. 17E, at least a portion of the specific gas component desorbed from the solid adsorbent in the first chamber 10A is transferred by the pump 20 to the second chamber 10B.

The configuration shown in FIGs. 17A-17E requires fewer valves than, for example, the configuration shown in FIGs. 12A-12E. By adopting such a configuration, the device can be made simpler. Furthermore, in the configuration shown in FIGs. 17A to 17E, the length of the piping portion through which gas can pass in the above-described desorption step can be made shorter than in the configuration shown in FIGs. 12A to 12E, for example. By adopting such a configuration, the amount of gas remaining in the piping can be reduced, thereby shortening the time required to transfer the gas. For the same reason, it is also possible to increase the purity of a specific gas component being recovered. Furthermore, in the configuration shown in FIGs. 17A to 17E, a gas inlet 40 is provided in the first chamber 10A. In this case, as described above, by reducing the load on the pump 20, it is also possible to reduce the time and/or frequency required for maintenance of the pump 20.

FIG. 18A is a schematic diagram illustrating an example of a device according to another embodiment of the present invention. FIG. 18B is a flow diagram showing an example of an adsorption process using the device shown in FIG. 18A. FIG. 18C is a flow diagram showing an example of a process for removing gas from the second chamber in the device shown in FIG. 18A. FIG. 18D is a flow diagram showing an example of a desorption process using the device shown in FIG. 18A.

The gas recovery device 100 shown in FIG. 18A includes a first chamber 10A, a second chamber 10B, a pump 20, valves 30A/30B/30C, a gas inlet (exhaust port) 40, and a gas outlet 50.

In the device 100, a first chamber 10A, a pump 20, and a second chamber 10B are connected in this order by piping. The first chamber 10A is connected to a gas inlet (exhaust port) 40 via a two-way valve 30A. In this device 100, a four-way valve 30B is provided between the first chamber 10A and the pump 20, and between the pump 20 and the second chamber 10B. The second chamber 10B is connected to a gas outlet 50 via a two-way valve 30C.

In the adsorption process shown in FIG. 18B, valve 30A is open, valve 30B connects the first chamber 10A to the pump 20 and also connects the pump 20 to the second chamber 10B, and valve 30C is open. In this step, as indicated by the dashed arrow in FIG. 18B, first, the mixed gas is introduced directly into the first chamber 10A from the gas inlet 40 via the valve 30A. The introduction of the mixed gas is carried out by a pump 20 . The first chamber 10A contains a solid adsorbent that adsorbs at least a portion of a specific gas component from the mixed gas. Most of the gas that has not been adsorbed passes through valve 30B, pump 20, valve 30B, and second chamber 10B and is discharged from gas outlet 50 to the outside of the system.

In the removal process from the second chamber shown in FIG. 18C, valve 30C is closed, valve 30B connects second chamber 10B with pump 20 and first chamber 10A, and valve 30A is open. In this step, as indicated by the dashed arrow in FIG. 18C, at least a portion of the gas in the second chamber 10B is exhausted to the outside of the system via the exhaust port 40. This step is carried out for the purpose of removing any gas remaining in the second chamber 10B after the adsorption step shown in FIG. 18B. As can be seen from FIG. 18C, this process is carried out by the power of pump 20.

In the desorption step shown in FIG. 18D, the valve 30A is closed, the valve 30B connects the first chamber 10A to the pump 20 and also connects the pump 20 to the second chamber 10B, and the valve 30C is closed. In this step, as shown by the dashed arrow in FIG. 18D, at least a portion of the specific gas component desorbed from the solid adsorbent in the first chamber 10A is transferred by the pump 20 to the second chamber 10B.

The configuration shown in FIGs. 18A-18D requires fewer valves than, for example, the configuration shown in FIGs. 10A-10E. By adopting such a configuration, the device can be made simpler. Furthermore, in the configuration shown in FIGs. 18A to 18D, the length of the piping through which gas can pass in the above-described desorption step can be made shorter than in the configuration shown in FIGs. 10A to 10E, for example. By adopting such a configuration, the amount of gas remaining in the piping can be reduced, thereby shortening the time required to transfer the gas. For the same reason, it is also possible to increase the purity of a specific gas component being recovered. Furthermore, in the configuration shown in FIGs. 18A to 18D, a gas inlet 40 is provided in the first chamber 10A. In this case, as described above, by reducing the load on the pump 20, it is also possible to reduce the time and/or frequency required for maintenance of the pump 20. In this example, the gas inlet provided in the first chamber 10A can also be used as an exhaust port. In this case, the device 100 can be made simpler than when the first chamber 10A is provided with a separate gas inlet and exhaust port.

### DESCRIPTION OF SYMBOLS

10A/10A'... First chamber
10B... Second chamber
20... Pump
30A/30A'/30B/30C/30D/30E... Valve
40/40'/40A/40B... Exhaust port and/or gas inlet
50/50A/50B... Gas inlet and/or gas outlet
60... Filter
70... Sealing plug
100... Gas recovery device

## Claims

1. A device for recovering a specific gas component from a mixed gas, comprising:
a first chamber containing a solid adsorbent for adsorbing the specific gas component in the mixed gas;
a second chamber for storing or utilizing the specific gas component desorbed from the solid adsorbent; and
a pump disposed between the first chamber and the second chamber and used to transport the specific gas component from the first chamber to the second chamber;
wherein said pump is also used to feed the mixed gas into the first chamber.

2. The device according to claim 1, further comprising a gas inlet for supplying the mixed gas to the device, the gas inlet being disposed between the first chamber and the second chamber.

3. The device according to claim 1, further comprising a gas outlet for removing gases other than the specific gas component remaining in the first chamber, the gas outlet being disposed between the first chamber and the second chamber.

4. The device according to claim 2, wherein the gas inlet is also used as a gas outlet for removing gases other than the specific gas component remaining in the first chamber.

5. The device according to claim 1, further comprising a gas inlet for supplying the mixed gas to the device, the gas inlet being disposed in the first chamber.

6. The device according to claim 5, further comprising a gas outlet for removing gases other than the specific gas component remaining in the first chamber, the gas outlet being disposed between the first chamber and the second chamber.

7. The device according to any one of claims 1 to 6, wherein said pump is also used to remove gases other than the specific gas component remaining in the first chamber.

8. The device according to any one of claims 1 to 6, wherein said pump is also used to remove gas from the second chamber.

9. The device according to claim 1, further comprising a filter between the first chamber and the pump.

10. The device according to any one of claims 1 to 6, further comprising:
at least one valve for varying the flow of gas through the device; and
a controller for controlling the operation of the valve.

11. The device according to any one of claims 1 to 6, wherein the specific gas component is a greenhouse gas or a harmful gas.

12. The device according to any one of claims 1 to 6, wherein the mixed gas is air and the specific gas component is carbon dioxide.

13. The device according to any one of claims 1 to 6, wherein the solid adsorbent comprises a metal-organic framework.

14. A method for recovering a specific gas component from a mixed gas, comprising the steps of:
feeding the mixed gas into a solid adsorbent using a pump, thereby adsorbing the specific gas component in the mixed gas onto the solid adsorbent; and
desorbing the specific gas component from the solid adsorbent using said pump.

15. The method according to claim 14, the solid adsorbent being held in a first chamber, and further comprising the step of removing gases other than the specific gas component remaining in the first chamber between the step of adsorbing the specific gas component and the step of desorbing the specific gas component.

16. The method according to claim 15, wherein the step of removing the remaining gas from the first chamber is also performed using said pump.

17. The method according to any one of claims 14 to 16, further comprising the step of transporting the specific gas component desorbed from the solid adsorbent to a second chamber using said pump.

18. The method according to claim 17, further comprising the step of removing gas from the second chamber using said pump.

19. The method according to claim 18, wherein the step of removing gas from the second chamber is performed prior to the step of adsorbing the specific gas component.

20. The method according to any one of claims 14 to 16, wherein the specific gas component is a greenhouse gas or a harmful gas.

21. The method according to any one of claims 14 to 16, wherein the mixed gas is air and the specific gas component is carbon dioxide.

22. The method according to any one of claims 14 to 16, wherein the solid adsorbent comprises a metal-organic framework.
